# EUROPEAN PATENT APPLICATION

(11) **EP 4 385 302 A1**
(43) Date of publication of application: **19.06.2024**
(21) Application number: 22863431.7
(22) Date of filing: 30.08.2022
(51) Int. Cl.: A01D 34/00, A01D 69/02, A01D 69/06, A01D 69/10, A01D 67/00, A01D 75/28, F16H 1/28, F16D 65/14, B60K 7/00

(54) **GARDEN TOOL**

(30) Priority: 01.09.2021 CN 202122103637 U; 14.09.2021 CN 202111078282; 14.09.2021 CN 202122228458 U; 17.11.2021 CN 202122825381 U; 08.02.2022 CN 202220259436 U
(71) Applicant: Globe (Jiangsu) Co., Ltd., Changzhou, Jiangsu 213023 (CN)
(72) Inventor: WEI, Qunli, hangzhou, Jiangsu 213023 (CN); SHI, Dongdong, hangzhou, Jiangsu 213023 (CN); SHI, Qinghua, hangzhou, Jiangsu 213023 (CN); JI, Qin, hangzhou, Jiangsu 213023 (CN); CHEN, Hui, hangzhou, Jiangsu 213023 (CN)
(74) Representative: Bergenstråhle & Partners AB
(86) International application number: PCT/CN2022/115745
(87) International publication number: WO 2023/030296

(57) **Abstract**

This application belongs to the field of a garden tool and specifically relates to a garden tool including: a body; at least two traveling wheels located on two sides of the body; and a driving unit. The driving unit is installed inside the traveling wheel. In the present application, the driving unit is installed inside the rim. Therefore, the overall axial dimension of the traveling unit is reduced, the lateral width of the garden tool such as a mower is reduced. Under the same width conditions, more lateral space is available for the garden tool, allowing for the installation of structures such as battery compartments and standing platforms. This design lowers the center of gravity of the garden tool like a mower, thereby enhancing their stability.

## Description

### TECHNICAL FIELD

The present disclosure belongs to the field of a garden tool and specifically relates to a garden tool.

### BACKGROUND

Garden tools such as mowers usually use motors to provide power and use reduction gearboxes to convert and output larger torques to meet work needs. However, the motor and the reduction gearbox take up a large space and will occupy the installation space of other modules. As a result, the overall center of gravity of the garden tool cannot be set at the ideal position, affecting the stability of the garden tool.

The parking method of garden tools usually adopts a mechanical braking structure, that is, using transmission mechanisms such as foot platforms and brake cables to drive the drum brake or disc brake mechanism to directly lock the drive axle. Mowers use the structure of a driving motor plus a gearbox, which does not have a locking function. If the mover, when climbing a slope, malfunctions and causes a power failure, it cannot brake on its own, and the operator must step on the mechanical brake as soon as possible, otherwise it will lead to the risk of skidding. In addition, long-term use of mechanical brakes will cause the brake pads to become thinner and the brake function may fail. Therefore, the brake pads need to be replaced regularly. The failure that occurs when the mower is climbing may result in the danger of sliding.

As to existing garden tools, due to the limited installation space, sufficient heat dissipation channels cannot be reserved, resulting in poor heat dissipation of motors and other electrical equipment, affecting the service life of the equipment.

### SUMMARY

The present disclosure is to provide a garden tool that may save lateral assembly space and enhance stability.

One or more embodiments of the present disclosure provide a garden tool. The garden tool includes a body, at least two traveling wheels located on two sides of the body, respectively, and a driving unit including a driving motor and a reducer. A power input end of the reducer is connected to an output shaft of the driving motor. The reducer is mounted in a rim of the traveling wheel. A power output end of the reducer is fixedly connected to the rim of the traveling wheel. A casing of the driving motor is fixedly connected to the body.

In exemplary embodiments of the present disclosure, the reducer includes: a core shaft synchronously rotatably connected to the output shaft of the driving motor, where a first sun gear is provided on the core shaft and is coaxially fixed with the core shaft; a first planet gear carrier rotatably connected to the core shaft, where a first planet gear and a second sun gear are provided on the first planet gear carrier, the first planet gear is rotatably connected to the first planet gear carrier, the first planet gear engages with the first sun gear, and the second sun gear is coaxially fixed with the first planet gear carrier; a second planet gear carrier fixedly connected to the casing of the driving motor, where a second planet gear is rotatably provided on the second planet gear carrier, and the second planet gear engages with the second sun gear; and a reducer housing fixedly connected to the rim, where a first internal ring gear and a second internal ring gear are provided on the reducer housing, the first internal ring gear and the second internal ring gear are axially arranged at intervals, the first internal ring gear engages with the first planet gear, and the second internal ring gear engages with the second planet gear.

In exemplary embodiments of the present disclosure, the reducer housing includes a cylindrical side wall and an end cover, the cylindrical side wall is rotatably connected to the second planet gear carrier through a bearing, and the end cover is fixed on an end of the cylindrical side wall away from the driving motor.

In exemplary embodiments of the present disclosure, a sliding sealing ring is provided between the cylindrical side wall and the casing of the driving motor.

In exemplary embodiments of the present disclosure, the second planet gear carrier is integrated with the casing of the driving motor.

In exemplary embodiments of the present disclosure, the reducer housing is rotatably connected to the second planet gear carrier through a bearing.

In exemplary embodiments of the present disclosure, the core shaft is integrated with the output shaft of the driving motor.

In exemplary embodiments of the present disclosure, the core shaft is detachably connected to the output shaft of the driving motor.

In exemplary embodiments of the present disclosure, the first planet gear carrier includes a first component and a second component that are arranged separately from each other, the first planet gear is rotatably arranged on the first component, the second sun gear is relatively fixed to the second component, and a synchronous rotational fit is formed between the first component and the second component through keys or teeth.

In exemplary embodiments of the present disclosure, heat dissipation ribs are provided on an outer wall of the casing of the driving motor, a fan is provided at one end of the reducer housing facing toward the casing of the driving motor, the fan is configured so that when the reducer housing rotates relative to the casing of the driving motor, an air flow generated by the fan flows through the heat dissipation ribs.

In exemplary embodiments of the present disclosure, the fan includes an annular base plate and blades evenly arranged along a circumferential direction of the annular base plate, an end of the reducer housing close to the casing of the drive motor is provided with a flange, the annular base plate is mounted on a side of the flange facing toward the casing of the driving motor, and the blades protrude toward the heat dissipation ribs.

In exemplary embodiments of the present disclosure, the heat dissipation ribs protrude along a radial direction of the casing of the driving motor, the heat dissipation ribs are strip-shaped, and the length direction of the heat dissipation ribs is parallel to an axis direction of the casing of the driving motor.

In order to achieve the above objects and other related objects, one or more embodiments of the present disclosure provide a garden tool. The garden tool includes a body, at least two traveling wheels located on two sides of the body, respectively, and a hub motor mounted in a rim of the traveling wheel. The hub motor includes a motor body and a motor rotating shaft, the motor body is fixedly connected to the rim of the traveling wheel, and the motor rotating shaft is fixedly connected to the body.

In exemplary embodiments of the present disclosure, the garden tool also includes a platform connected to the body. The platform is partially located between two traveling wheels, and the front end of the platform is located in front of an axis line of the two traveling wheels.

In exemplary embodiments of the present disclosure, the motor body includes a motor stator and a plurality of magnetic tiles, the motor stator is connected to the motor rotating shaft, and the magnetic tiles are evenly distributed on an outer circumference of the motor stator.

In exemplary embodiments of the present disclosure, the garden tool also includes: a motor base, where a first end of the motor base is connected to the body, and a second end of the motor base is connected to the hub motor; and a circular keyway provided on an end face of the motor base close to the hub motor, where the motor rotating shaft is inserted into the circular keyway through a flat key.

In exemplary embodiments of the present disclosure, the body is provided with an avoidance opening, and a part of the motor rotating shaft beyond the circular keyway passes through the avoidance opening and is connected to the body through a bolt.

In exemplary embodiments of the present disclosure, the rotation speed of the hub motor is 100 to 140 rpm.

In exemplary embodiments of the present disclosure, the rated power of the hub motor is 2.8 to 3.2 kW.

In exemplary embodiments of the present disclosure, the garden tool further includes a shock absorber arranged below the platform, with a first end fixedly connected to the body and a second end abutting against the platform.

In exemplary embodiments of the present disclosure, the distance between the front end of the platform and the axis line of the two traveling wheels is between 70 mm and 85 mm.

In exemplary embodiments of the present disclosure, in the forward direction of the garden tool, the distance between the center of gravity of the garden tool and the axis line of the two traveling wheels is between 500 mm and 600 mm.

In exemplary embodiments of the present disclosure, the garden tool also includes a brake assembly that is disposed on an end surface of the motor base close to the hub motor and is connected to a brake handle of the garden tool via transmission. After the brake handle is gripped, the brake assembly abuts against a brake disc of the garden tool.

In exemplary embodiments of the present disclosure, the garden tool also includes a battery pack disposed on the body and used to provide power for the hub motor.

Some embodiments of the present disclosure may have the following technical effects.

For example, in some embodiments, the driving unit is mounted in the rim, thereby reducing the overall axial size of the traveling unit and reducing the lateral width of garden tools such as mowers. For garden tools such as mowers with the same width, extra space may be saved for the installation of battery compartments, standing platforms, and other structures, so that the center of gravity of garden tools such as mowers may be designed to be lower, thereby improving their stability.

For example, in some embodiments, the air flow generated by the fan flows along the outer wall of the casing. The passing air flow exchanges heat with the heat dissipation ribs and the outer wall of the casing, thereby cooling the driving motor.

For example, in some embodiments, when the garden tool is powered off, the electromagnetic braking mechanism loses power and the electric mower automatically enters the first state where the traveling wheels are braked, and there is no need for the operator to operate the mechanical brake. When the entire mower is climbing a slope, if the mower is powered off due to a malfunction, the electromagnetic brake mechanism automatically cuts off power and locks the mower to avoid the risk of sliding caused by the operator's maloperation

### BRIEF DESCRIPTION OF DRAWINGS

FIG. 1 is a schematic perspective structural diagram of a mower according to exemplary embodiments of the present disclosure;
FIG. 2 is a schematic perspective structural diagram of a mower according to exemplary embodiments of the present disclosure;
FIG. 3 is an exploded view of a traveling driving mechanism according to exemplary embodiments of the present disclosure;
FIG. 4 is an exploded view of the internal structure of a reducer according to exemplary embodiments of the present disclosure;
FIG. 5 is an exploded view of a second planet gear carrier and a second planet gear according to exemplary embodiments of the present disclosure;
FIG. 6 is a perspective view of a rotating carrier according to exemplary embodiments of the present disclosure;
FIG. 7 is a cross-sectional view of a traveling driving mechanism according to exemplary embodiments of the present disclosure;
FIG. 8 is a schematic diagram of a reducer according to exemplary embodiments of the present disclosure;
FIG. 9 is a rear view of a mower according to exemplary embodiments of the present disclosure;
FIG. 10 is a perspective view of a lawn mower according to exemplary embodiments of the present disclosure;
FIG. 11 is a cross-sectional view of a driving unit according to exemplary embodiments of the present disclosure, without showing wheels;
FIG. 12 is an exploded view of a driving unit according to exemplary embodiments of the present disclosure, without showing wheels;
FIG. 13 is a schematic diagram of the transmission of a driving motor and a reducer according to exemplary embodiments of the present disclosure;
FIG. 14 is a perspective view of a casing of a driving motor according to exemplary embodiments of the present disclosure;
FIG. 15 is a perspective view of a fan blade according to exemplary embodiments of the present disclosure;
FIG. 16 is a perspective view of a reducer housing according to exemplary embodiments of the present disclosure;
FIG. 17 is an exploded view of a first planet gear carrier and its related components according to exemplary embodiments of the present disclosure;
FIG. 18 shows a usage state diagram of a stand-on mower according to exemplary embodiments of the present disclosure;
FIG. 19 shows a top view of a stand-on mower according to exemplary embodiments of the present disclosure;
FIG. 20 is a schematic structural diagram of a stand-on mower according to exemplary embodiments of the present disclosure;
FIG. 21 is a schematic structural diagram of an hub motor according to exemplary embodiments of the present disclosure;
FIG. 22 is a schematic structural diagram of a motor base according to exemplary embodiments of the present disclosure;
FIG. 23 is a schematic structural diagram of a stand-on part according to exemplary embodiments of the present disclosure;
FIG. 24 is an exploded structural view of a platform according to exemplary embodiments of the present disclosure;
FIG. 25 is a schematic dimensional view of a platform according to exemplary embodiments of the present disclosure;
FIG. 26 is a usage state diagram of a stand-on mower according to exemplary embodiments of the present disclosure;
FIG. 27 is a front view of a stand-on mower according to exemplary embodiments of the present disclosure;
FIG. 28 is a top view of a stand-on mower according to exemplary embodiments of the present disclosure;
FIG. 29 is another usage state diagram of a stand-on mower according to exemplary embodiments of the present disclosure;
FIG. 30 is yet another usage state diagram of a stand-on mower according to exemplary embodiments of the present disclosure;
FIG. 31 is a three-dimensional exploded schematic diagram of an electric mower to exemplary embodiments of the present disclosure;
FIG. 32 is a top view of an electric mower according to exemplary embodiments of the present disclosure;
FIG. 33 is a cross-sectional view along the direction A-A in FIG. 32;
FIG. 34 are cross-sectional views along the direction B-B in FIG. 33;
FIG. 35 is a schematic diagram of a power system of an electric mower according to exemplary embodiments of the present disclosure;
FIG. 36 is schematic diagram of the power system of the electric mower according to exemplary embodiments of the present disclosure in a different direction;
FIG. 37 is the left view of FIG. 35;
FIG. 38 is an enlarged view of a cross-sectional structure in FIG. 35; and
FIG. 39 is an enlarged view of a cross-sectional structure in FIG. 36.

### DESCRIPTION OF EMBODIMENTS

It should be noted that the illustrations provided in the following embodiments only illustrate the basic concept of the present disclosure in a schematic manner, so the illustrations only show the components related to the present disclosure and are not based on the actual number, shape, and scale of components during implementation. In actual implementation, the type, quantity, and scale of each component can be arbitrarily changed, and the layout type of each component may also be more complex.

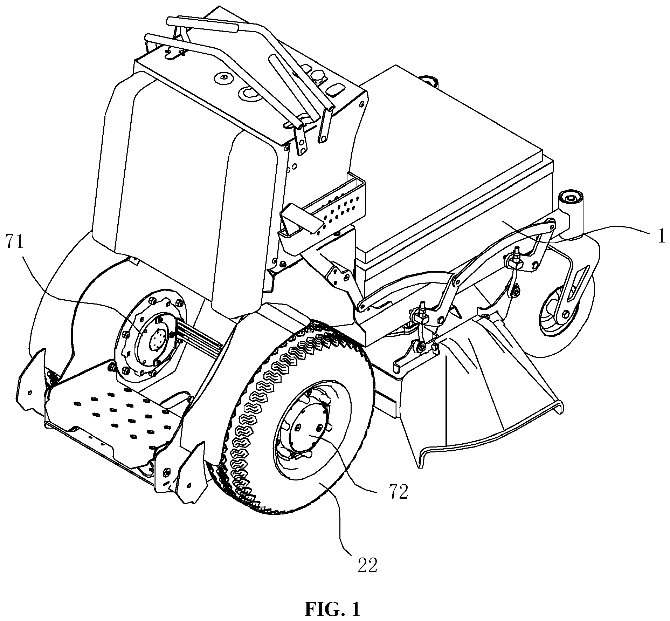

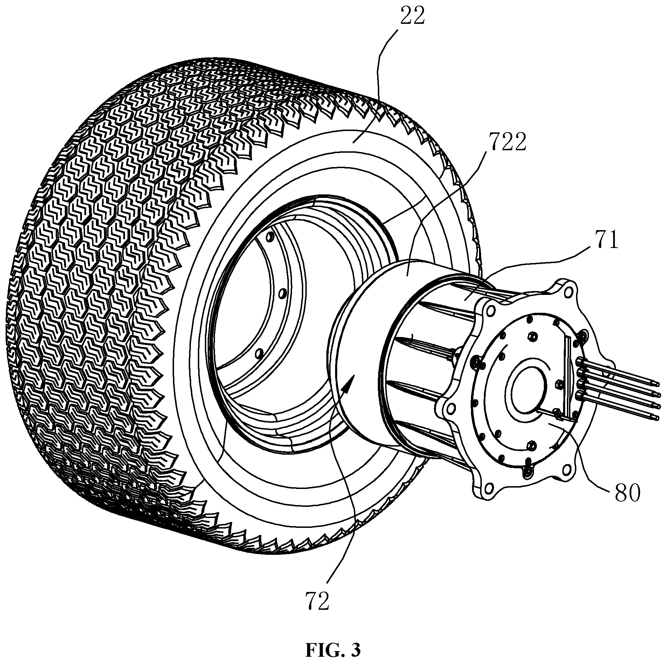

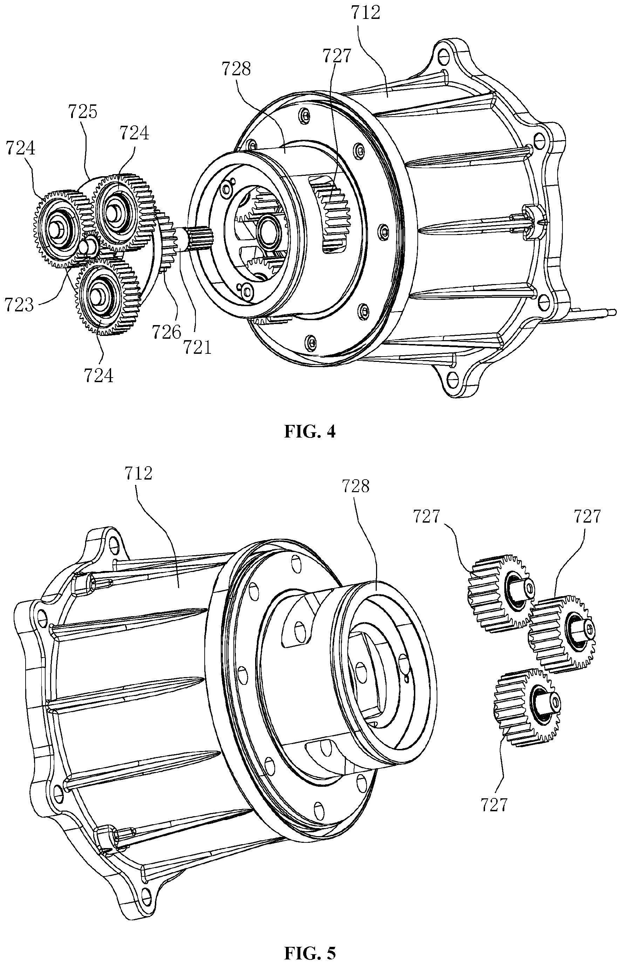

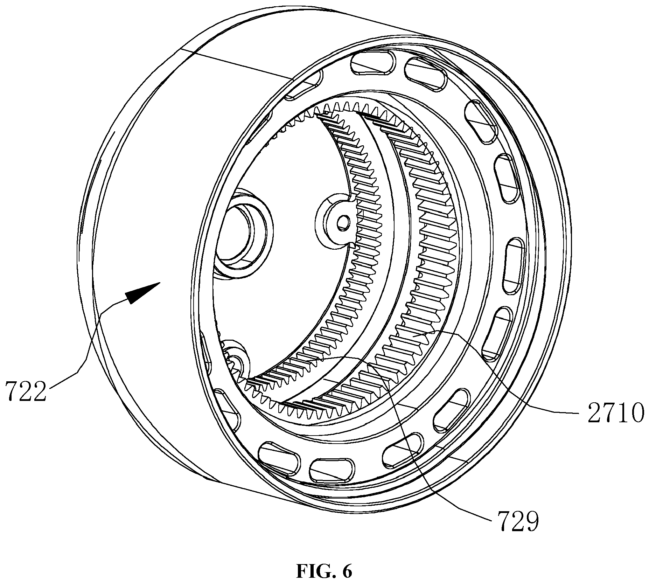

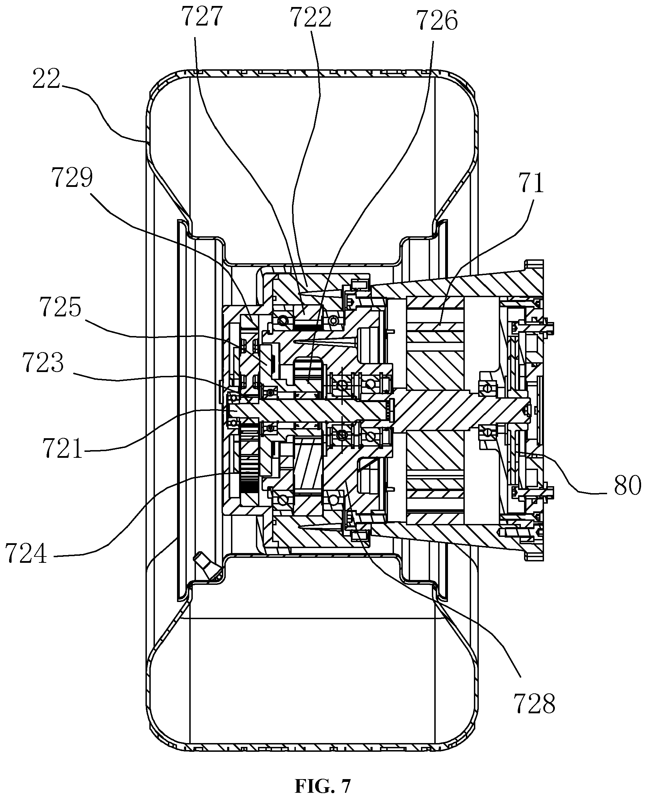

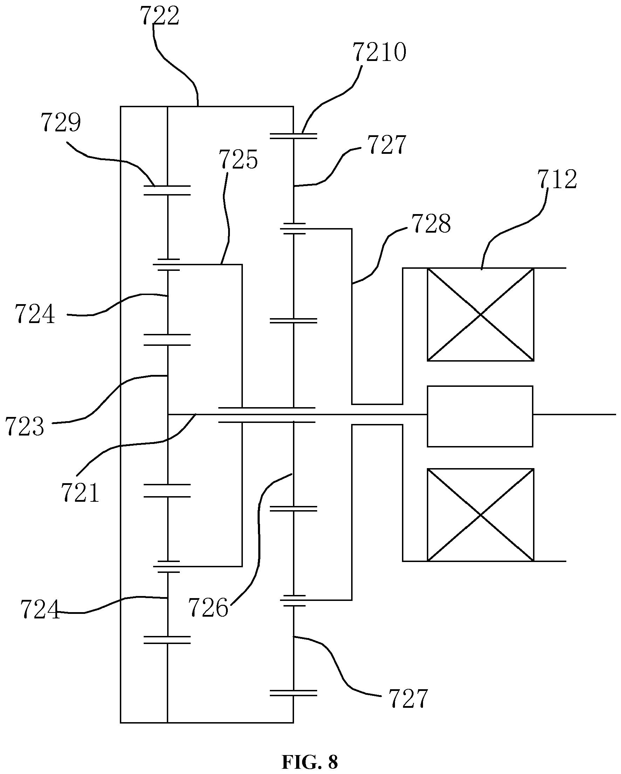

As shown in FIGS. 1-9. In exemplary embodiments of the present disclosure, a mower includes a body 1, traveling wheels 22, a driving motor 71, a power battery, a reducer 72, as well as necessary mowing mechanisms, operating mechanisms, control modules, etc.

Please refer to FIGS. 1-9. In exemplary embodiments, the body 1 is a stand-on mower body 1, that is, the operator stands on the mower to perform mowing operations. It can be understood that, in addition to the above model, a traveling driving mechanism of the present disclosure can also be applied to other mower models such as riding mowers and lawn mowers.

Referring to FIGS. 1-9. In exemplary embodiments, the traveling wheels 22 are located on both sides of the body 1. In exemplary embodiments, the traveling wheels 22, for example, are pneumatic wheels including tires and hubs. In exemplary embodiments, the traveling wheels 22 are integrated wheels made of high molecular polymer. The structure of the wheel is not limited to a certain form. However, the premise is that the center of the wheel needs to have a cavity that can accommodate the reducer 72 and even the driving motor 71.

Please refer to FIGS. 1-9. In exemplary embodiments, the driving motor 71 is fixedly connected to the body 1. It can be understood that the driving motor 71 in the present disclosure not only serves as a driving element but also serves as a supporting structure connecting the traveling wheel 22 and the body 1. Therefore, a casing of the driving motor 71 should have sufficient structural strength. For example, cast iron, cast aluminum, and other materials can be used as the material of the casing of the driving motor 71.

Please refer to FIGS. 1-9. In exemplary embodiments, a power input end of the reducer 72 is connected to the driving motor 71, and a power output end of the reducer 72 is connected to the traveling wheel 22. For example, the reducer 72 is placed in an axial space in the middle of the traveling wheel 22. It can be understood that the reducer 72 may increase the output torque of the driving motor 71, thus reducing the power and size of the driving motor 71 while ensuring sufficient power. In exemplary embodiments of the present disclosure, the reducer 72 is placed in the axial space at the center of the traveling wheel 22 and is used as a supporting shaft of the traveling wheel 22, which improves space utilization and reduces the overall lateral width of the mower, resulting in better movement flexibility on the premise of meeting the power design requirements.

Please refer to FIGS. 1-9. In exemplary embodiments, the reducer 72 is a planetary reducer. The characteristic of the planetary reducer is that it can produce a large reduction transmission ratio with a small axial size, and its axial length can even be smaller than the width of the traveling wheel 22. Therefore, the reducer 72 can be completely hidden in the traveling wheel 22, greatly improving the lateral space utilization of the mower.

Please refer to FIGS. 1-9. In exemplary embodiments of the present disclosure, the reducer 72 includes a core shaft 721, a first planet gear carrier 725, a second planet gear carrier 728, and a reducer housing 722. In exemplary embodiments, the core shaft 721 is disposed at the center of the traveling wheel 22 along the axial direction of the traveling wheel 22. In exemplary embodiments, a first sun gear 723 is disposed on the core shaft 721, and the first sun gear 723 and the core shaft 721 are coaxially fixedly connected. In exemplary embodiments, the first planet gear carrier 725 is rotatably connected to the core shaft 721. In exemplary embodiments, a first planet gear 724 and a second sun gear 726 are disposed on the first planet gear carrier 725. In exemplary embodiments, more than one first planet gear 724 is disposed on the first planet gear carrier 725. In exemplary embodiments, the first planet gear 724 is rotatably connected to the first planet gear carrier 725, and the first planet gear 724 engages with the first sun gear 723. In exemplary embodiments, the second sun gear 726 is coaxially fixedly connected to the first planet gear carrier 725. In exemplary embodiments, the second planet gear carrier 728 is fixedly arranged relative to the casing of the driving motor 71. In exemplary embodiments, a plurality of second planet gears 727 are rotatably arranged on the second planet gear carrier 728, and the second planet gear 727 engages with the second sun gear 726. In exemplary embodiments, the reducer housing 722 is fixedly connected to the traveling wheel 22, and a first internal ring gear 729 and a second internal ring gear 7210 are disposed on the reducer housing 722. In exemplary embodiments, the first internal ring gear 729 and the second internal ring gear 7210 are fixedly connected to the reducer housing 722 through interference fit or fixing pins, bolts, etc., thereby driving the reducer housing 722 to rotate. In exemplary embodiments, the first internal ring gear 729 and the second internal ring gear 7210 are spaced apart from each other along the axial direction. In exemplary embodiments, the first internal ring gear 729 engages with the first planet gear 724, and the second internal ring gear 7210 engages with the second planet gear 727. In exemplary embodiments of the present disclosure, the reducer 72 is different from the traditional planetary reducer. In exemplary embodiments of the present disclosure, there are two sets of planet gear mechanisms, and the internal ring gears (i.e. the first internal ring gear 729 and the second internal ring gear 7210) of the two sets of planet gear mechanisms are both fixedly connected to the reducer housing 722, so they can be driven from both ends of the reducer housing 722, making the power distribution more even. In addition, the differential cooperation between the two sets of planet gears realizes two-stage deceleration from the driving motor 71 to the traveling wheel 22, resulting in a larger transmission ratio and an increase in torque.

Referring to FIGS. 1-9. In exemplary embodiments, the core shaft 721 is synchronously rotatably connected to a main shaft of the driving motor 71 through a spline. In exemplary embodiments, the reducer housing 722 includes a cylindrical side wall and an end cover. In exemplary embodiments, the cylindrical side wall is rotatably connected to the second planet gear carrier 728 through a bearing. In exemplary embodiments, the end cover is fixed on an end of the cylindrical side wall away from the driving motor 71. In exemplary embodiments, one end of the core shaft 721 is rotatably connected to the end cover through a bearing, and the other end of the core shaft 721 is rotatably connected to the second planet gear carrier 728 through a bearing. In exemplary embodiments of the present disclosure, the second planet gear carrier 728 can be integrally processed and formed with the casing of the driving motor 71, that is to say, they are the same component. For example, a protruding structure is directly provided at the front end of the casing of the driving motor 71, and the second planet gear 727 is directly mounted on the protruding structure, which can simplify the assembly process, save materials, reduce costs, and make the assembly structure simpler. As long as the casing of the driving motor 71 is fixed on the mower body, the second planet gear carrier 728 can be fixed. In addition, the second planet gear carrier 728 and the casing of the driving motor 71 can also be processed and formed separately, and then they are connected as one piece through welding, riveting, bolting, etc.

Referring to FIGS. 1-9. In exemplary embodiments, a sliding sealing ring is provided between the cylindrical side wall and the casing of the driving motor 71. In exemplary embodiments the cylindrical side wall, the end cover, and the casing of the driving motor 71 form a sealed gear box, so that lubricant may be injected to improve the transmission efficiency of the reducer 72.

Referring to FIGS. 1-9. In exemplary embodiments, a flange 23 is provided on an inner ring surface of the hub, and the flange 23 is detachably and fixedly connected to the reducer housing 722. Although the present disclosure adopts a new transmission structure, the installation method of the traveling wheel 22 is basically the same as that of ordinary wheels, which facilitates disassembly, assembly, and maintenance.

Please refer to FIGS. 1-9. In exemplary embodiments, at least part of the driving motor 71 protrudes into an axial space at the center of the traveling wheel 22. In exemplary embodiments, the driving mechanism also includes a brake 60, and the brake 60 is disposed on the side of the driving motor 71 opposite to the reducer 72. For example, the brake 60 is an electromagnetic brake 60. In exemplary embodiments, the brake 60 includes a movable friction plate that is synchronously rotatably connected to the main shaft of the driving motor 71, a fixed friction plate that is relatively fixed to the casing of the driving motor 71, and an electromagnetic driver used for driving the movable friction plate close to or away from the fixed friction plate. In exemplary embodiments of the present disclosure where the electromagnetic brake 60 is used for braking, since the electromagnetic brake 60 has a smaller axial size, the lateral space of the mower may be further saved.

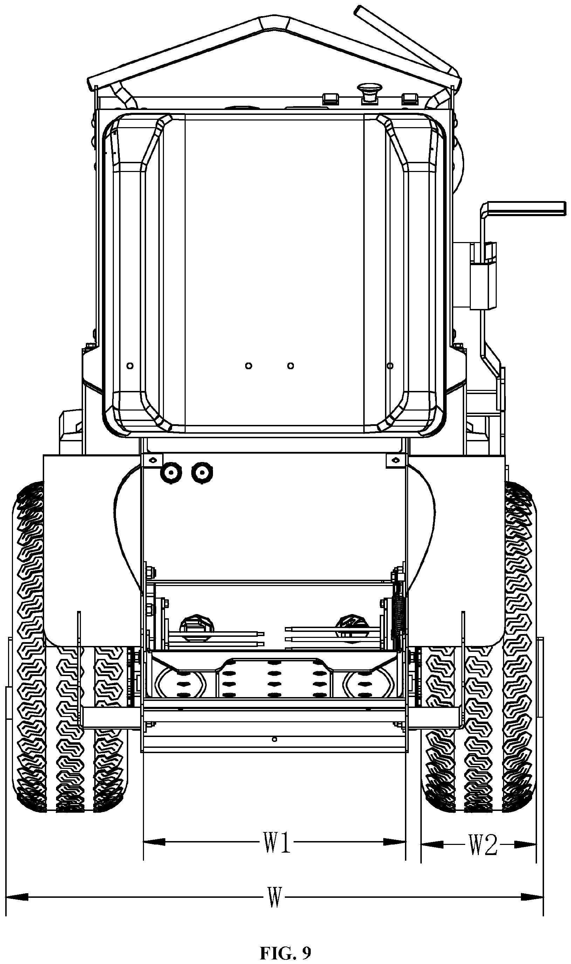

Please refer to FIG. 9, in exemplary embodiments, the weight of the mower may be up to 550 kg. Considering the load of the tires, a tire that has a width W2 less than 180 mm may be selected. The width W of the entire mower will be less than 33 inches (838.2 mm), and the width W1 of a position for a user to stand on will be at least greater than 400 mm. Therefore, when standing on the platform, a user will not feel cramped.

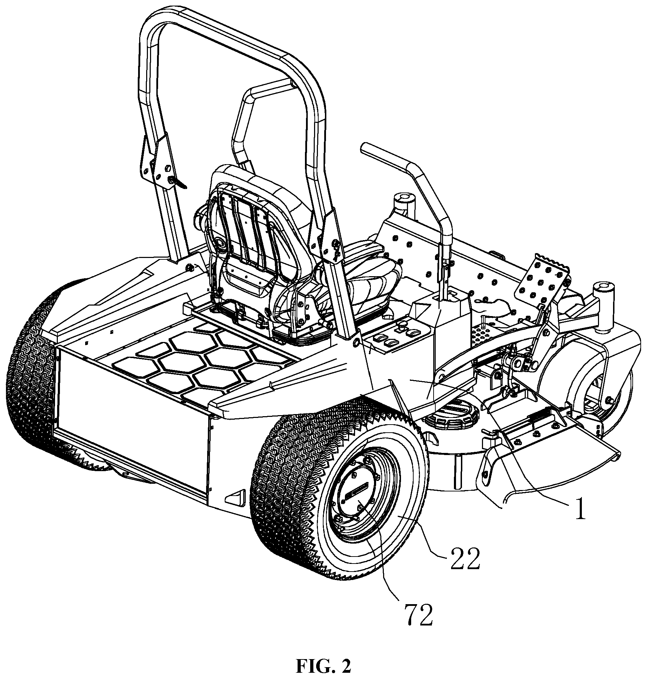

To sum up, the reducer 72 may increase the output torque of the driving motor 71, thus reducing the power and the size of the driving motor 71 while ensuring sufficient power. In exemplary embodiments of the present disclosure, the reducer 72 is placed in the axial space at the center of the traveling wheel 22 and used as the supporting shaft of the traveling wheel 22, which may improve the space utilization and reduce the overall lateral width of the mower, providing it with more movement flexibility while meeting the power design requirements. For example, the planetary reducer may produce a large reduction transmission ratio with a small axial size, and its axial length may even be smaller than the width of the traveling wheel 22. Therefore, the reducer 72 may be completely hidden in the traveling wheel 22, greatly improving the lateral space utilization of the mower. As shown in FIG. 1, for a stand-on mower, since there is no interference from the driving motor 71 and the reducer 72, the platform may extend forward to increase the operator's standing space. As a result, when standing on the platform, the center of gravity of the user's body may be located at the center of the rotation axis of the traveling wheel 22 of the stand-on mower. Thus, when the stand-on mower turns in place, there may be no rotation radius, and no centrifugal force may be generated, which may eliminate the risk of the user's body being thrown away. In addition, when the platform moves forward, the center of gravity of the user's body may also move forward accordingly. As a result, it may be safer and less likely to roll over when climbing a slope or moving over an uneven surface. As shown in FIG. 2, for a riding mower, the power battery may be mounted in a lowered position to lower the center of gravity of the power battery and improve the stability of the mower body. In addition, after the power battery is mounted in a lowered position, one end of the power battery may extend forward to a position under the seat of the riding mower. In exemplary embodiments of the present disclosure, there are two sets of planet gear mechanisms, and the internal ring gears of the two sets of planet gear mechanisms are fixedly connected to the reducer housing 722. Therefore, the reducer housing 722 may be driven from its both ends, which may make the power distribution more even. In addition, the differential cooperation between the two sets of planet gears may achieve two-stage deceleration from the driving motor 71 to the traveling wheel 22, achieving a larger transmission ratio and a torque increase.

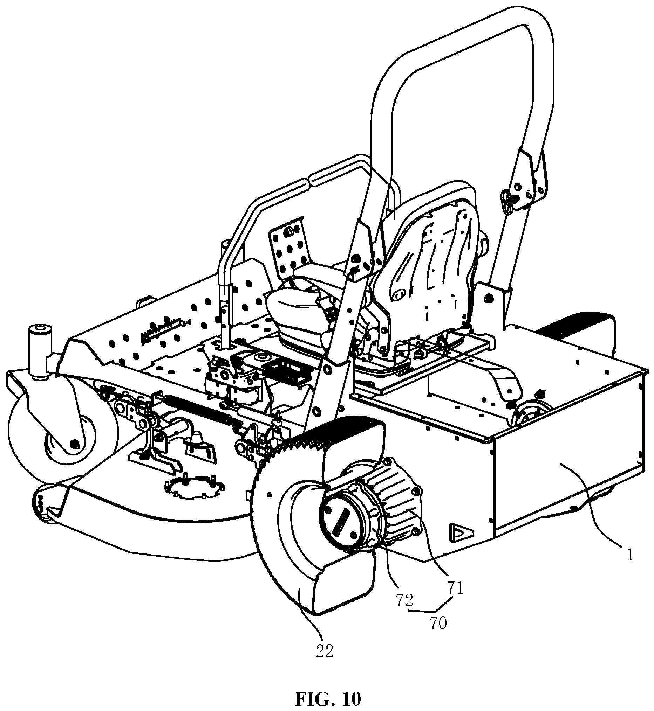

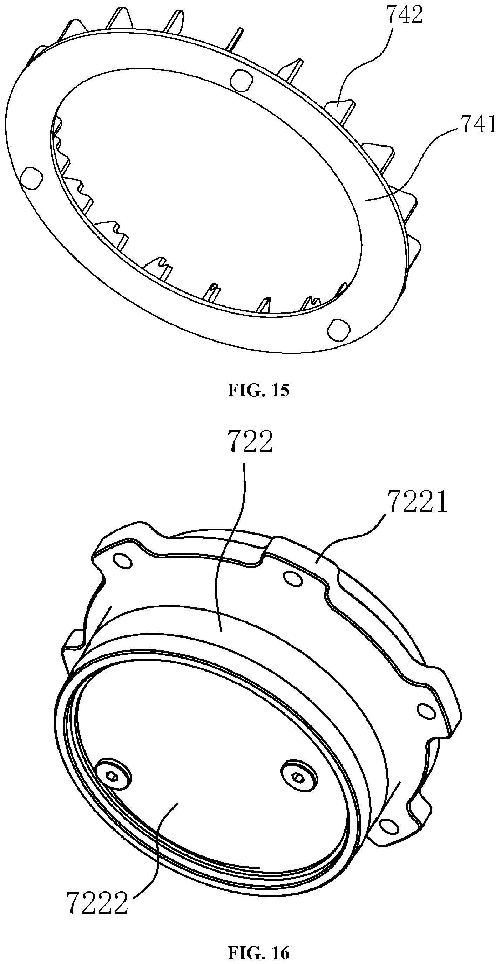

Please refer to FIGS. 10-17. In exemplary embodiments of the present disclosure, a mower includes a body 1 and two sets of traveling units. The two sets of traveling units are located on both sides of the body 1. In exemplary embodiments, there are two steering wheels at the front end of the body 1. In exemplary embodiments, the traveling unit includes a traveling wheel 22 and a driving unit 70. In exemplary embodiments, the driving unit 70 includes a driving motor 71 and a reducer 72. In exemplary embodiments, the traveling wheels 22 of the two sets of traveling units are mounted at the rear end of the body 1 as rear wheels. In exemplary embodiments, for example, a mowing mechanism is provided between the steering wheels and the rear wheels. In exemplary embodiments, the mowing mechanism generally includes a cutting blade and a cutting deck, as well as an independent motor for driving the cutting blade to move. It can be understood that the mowing mechanism may not only be disposed between the front and rear wheels. In some embodiments, the mowing mechanism is disposed on the front, rear, or side of the body. For example, a seat is disposed above the body 1 for the operator to sit on the mower. For example, the front end of the seat is provided with a corresponding control lever to control the traveling, mowing, and other actions of the mower. In exemplary embodiments, a battery pack compartment is located at the rear end of the body 1. For example, the two sets of traveling units are disposed on both sides of the body or below the body.

It should be noted that the traveling unit of the present disclosure should apply to a wider range of application scenarios and is not limited to a certain type of mower. For example, the above-mentioned mower can also be a lawn mower or a stand-on mower. Changes in the form of the mower will not have a substantial impact on the structure and function of the present disclosure. Since the traveling unit of the present disclosure is highly integrated and therefore may have high compatibility with most types of garden tools.

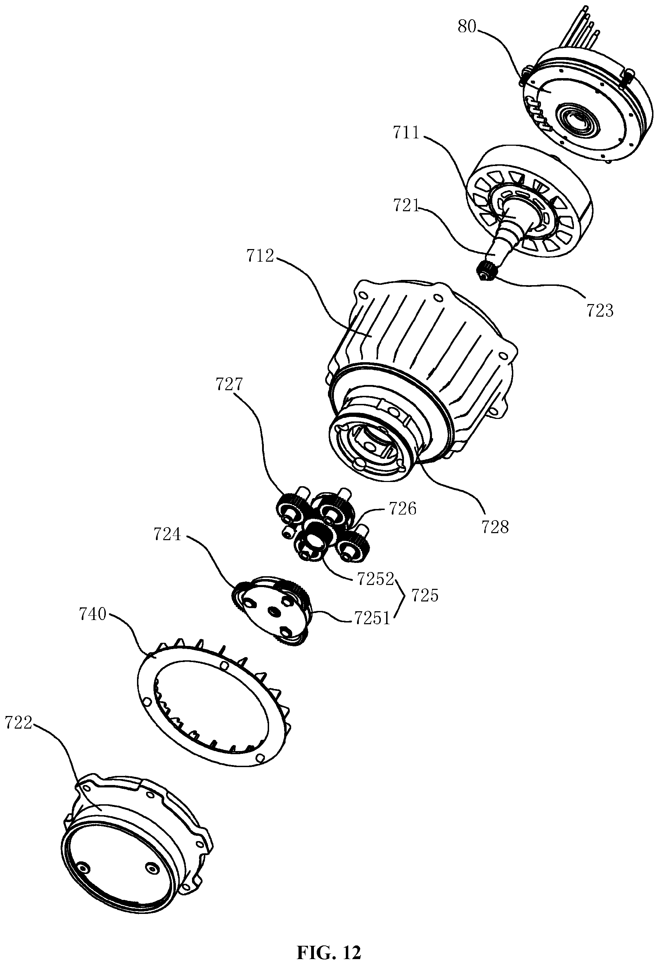

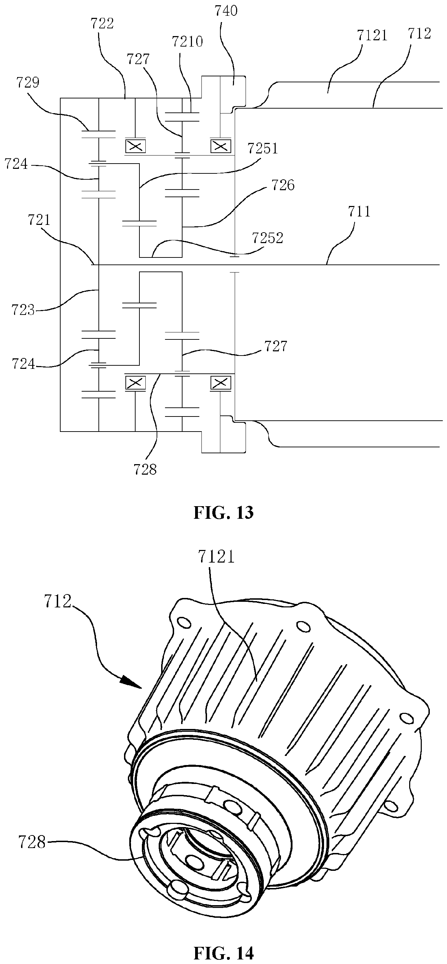

Referring to FIGS. 12 and 14. In exemplary embodiments, the driving motor 71 includes a casing 712 and a main shaft 711. It can be understood that the driving motor 71 should also have a necessary stator and a rotor, where the stator is fixedly connected to the casing 712, and the rotor is connected to the main shaft 711.

Referring to FIG. 10. In exemplary embodiments, the traveling wheel 22 includes a rim and a tire. It should be noted that in the present disclosure, the rim refers to the rigid support structure of the inner ring of the traveling wheel 22, and the tire refers to the elastic buffer structure on the periphery of the traveling wheel 22. In some embodiments, the rim and the tire are separated from each other. In some embodiments, the rim is integrated with the tire. For example, an integrally formed air-free wheel can also be used, which also falls within the scope of protection claimed by the present disclosure.

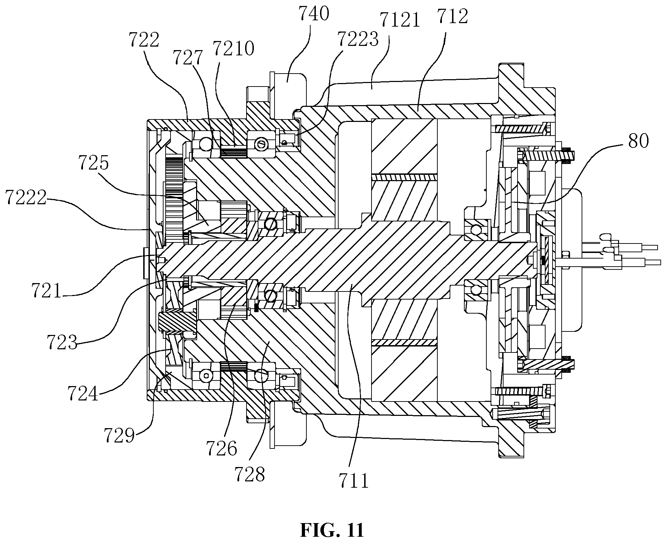

Please refer to FIGS. 11, 12 and 13. In exemplary embodiments, the reducer 72 is mounted in the rim. In exemplary embodiments, the reducer 72 includes a core shaft 721, a reducer housing 722, and a planetary reduction mechanism. In exemplary embodiments, the core shaft 721 serves as the power input end of the reducer 72 and is synchronously rotatably connected with the main shaft 711, the reducer housing 722 serves as the power output end of the reducer 72 and is fixedly connected to the rim, and the planetary reduction mechanism is mounted between the core shaft 721 and the reducer housing 722. In exemplary embodiments of the present disclosure, the reducer 72 is mounted in the rim, which can be understood as using the reducer 72 as the supporting shaft of the traveling wheel 22. It can be understood that the planetary reducer can utilize a short axial space to achieve reduction transmission with a larger transmission ratio. On this basis, in exemplary embodiments of the present disclosure, the planetary reducer is placed in the inner ring space of the traveling wheel 22, further reducing the overall axial size of the traveling unit. When it comes to garden tools such as mowers, the lateral width of garden tools such as mowers is reduced. In other words, under the same width conditions, more lateral space is left for garden tools such as mowers. Battery compartments, standing platforms, and other structures may be mounted in this space, enabling the center of gravity of garden tools such as mowers to be designed lower to improve their stability.

Please refer to FIGS. 11 and 14. In exemplary embodiments, the outer wall of the casing 712 is provided with heat dissipation ribs 7121, and the reducer housing 722 is provided with a fan 740 at one end close to the casing 712. In exemplary embodiments, the fan 740 is assembled so that when the reducer housing 722 rotates relative to the casing 712, the airflow generated by the fan 740 can flow through the heat dissipation ribs 7121. In exemplary embodiments, the heat dissipation ribs 7121 are protruded from the casing 712 and extend along the radial direction of the casing 712. In exemplary embodiments, the heat dissipation ribs 7121 are strip-shaped, and the length direction of the heat dissipation ribs 7121 is parallel to the axis direction of the main shaft 711. In exemplary embodiments, the fan 740 includes an annular base plate 741 and blades 742 evenly arranged along the circumferential direction of the annular base plate 741. In exemplary embodiments, the reducer housing 722 is provided with a flange 7221 at one end close to the casing 712, and the annular base plate 741 is mounted on a side of the flange 7221 toward the driving motor 71. In exemplary embodiments, the blades 742 protrude toward the heat dissipation ribs 7121. In exemplary embodiments, the airflow generated by the fan 740 flows along the outer wall of the casing 712, and the flow direction of the airflow is substantially parallel to the axial direction of the driving motor 71. In exemplary embodiments, the heat dissipation ribs 7121 are arranged in a long strip shape, and an airflow channel is formed between adjacent heat dissipation ribs 7121. For example, the airflow channel is parallel to the axis direction of the driving motor 71. In exemplary embodiments, the airflow generated by the fan 740 passes through both sides of each heat dissipation rib 7121 without hindrance, and when the airflow passes, it causes heat exchange with the heat dissipation ribs 7121 and the outer wall of the casing 712, thereby cooling the driving motor 71.

It can be understood that in the present disclosure, the specific structure of the fan 740 is not limited to the parts defined in the above embodiments. In exemplary embodiments, the fan 740 is integrated with the reducer housing 722. For example, the blades 742 are made by directly machining the end of the reducer housing 722. In exemplary embodiments, the blades 742 are integrally formed with the reducer housing 722 by casting or machining. Similarly, the specific structure of the heat dissipation ribs 7121 is not limited to the parts defined in the above embodiments. In exemplary embodiments, the heat dissipation ribs 7121 is configured as a separate structure from the casing 712. For example, the heat dissipation ribs 7121 are made of copper or aluminum materials with better thermal conductivity, improving the heat dissipation effect while reducing the manufacturing cost of the whole mower.

Please refer to FIGS. 11, 12, and 13. In exemplary embodiments, the planetary reduction mechanism includes a first sun gear 723, a first planet gear 724, a first planet gear carrier 725, a second sun gear 726, a second planet gear 727, a second planet gear carrier 728, a first internal ring gear 729, and a second internal ring gear 7210. In exemplary embodiments, the first sun gear 723 is configured to rotate synchronously with the core shaft 721, the first planet gear carrier 725 is rotatably connected with the core shaft 721, and the first planet gear 724 is rotatably connected with the planet gear carrier 725. In exemplary embodiments, the second sun gear 726 is configured to rotate synchronously with the first planet gear carrier 725, the second planet gear 727 is rotatably connected with the second planet gear carrier 728, and the second planet gear carrier 728 is fixedly connected with the casing 712. In exemplary embodiments, the first internal ring gear 729 and the second internal ring gear 7210 are configured to rotate synchronously with the reducer housing 722, respectively. In exemplary embodiments, the first planet gear 724 engages with the first sun gear 723 and the first internal ring gear 729, respectively, and the second planet gear 727 engages with the second sun gear 726 and the second internal ring gear 7210 respectively. It can be understood that, in the present disclosure, since two-stage planet gear reduction is adopted, a greater torque may be output when the power of the driving motor 71 is certain, so that the mower may adapt to most complex working conditions.

Please refer to FIG. 14. In exemplary embodiments of the present disclosure, the second planet gear carrier 728 is integrated with the casing 712. It can be understood that, in exemplary embodiments, the second planet gear carrier 728 and the casing 712 are processed and formed into an integrated structure, thereby, on the one hand, simplifying the assembly process, reducing the cumulative assembly errors of the entire mower, and reducing assembly costs, and on the other hand, making the structure of the entire mower more compact, further saving the lateral space of the mower. In some embodiments, the second planet gear carrier 728 and the casing 712 are configured as separate structures and are fixedly connected with each other, for example, through bolts.

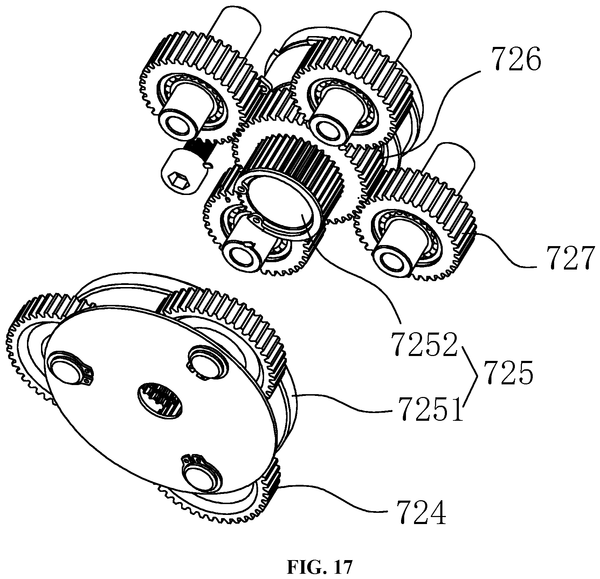

Please refer to FIG. 17. In exemplary embodiments, the first planet gear carrier 725 includes a first component 7251 and a second component 7252 that are arranged separately, where the first planet gear 724 is rotatably disposed on the first component 7251, the second sun gear 726 is fixedly connected to the second component 7252, and the first component 7251 and the second component 7252 form a synchronous rotational fit through keys or teeth. In exemplary embodiments, the first component 7251 includes a disc-shaped body, and there is a spline hole in the center of the disc-shaped body. In exemplary embodiments, there are three first planet gears 724 arranged around the spline hole along the circumferential direction of the disc-shaped body. In exemplary embodiments, the second component 7252 includes a tubular shaft body, and the outer wall of the tubular shaft body is provided with splines that match the spline hole. In exemplary embodiments, the second sun gear 726 is fixedly connected to the tubular shaft body. In exemplary embodiments, the second sun gear 726 is assembled with the tubular shaft in an interference fit through a process such as cold sheathing or hot sheathing. It can be understood that the assembly method of the second sun gear 726 and the tubular shaft body is not limited to the above embodiments. In fact, any assembly method that can make the second sun gear 726 and the tubular shaft body rotate synchronously falls within the scope of the present disclosure. It can be understood that, in exemplary embodiments, the first planet gear carrier 725 is divided into two parts to facilitate the assembly of the first planet gear 724 and the second sun gear 726, respectively.

Referring to FIGS. 11 and 13. In exemplary embodiments, the reducer housing 722 is rotatably connected to the second planet gear carrier 728 through a bearing. It can be understood that in exemplary embodiments of the present disclosure, the casing 712 not only serves as a supporting structure for the driving motor 71 but also serves as a supporting structure for the entire traveling wheel 22. When the reducer housing 722 is fixedly connected to the traveling wheel 22, it is equivalent to the situation where the traveling wheel 22 is rotatably disposed on the casing 712. In exemplary embodiments of the present disclosure, the casing 712 is used as the supporting shaft of the traveling wheel 22, so that the structure of the traveling unit is more compact.

Please refer to FIG. 11. In exemplary embodiments, an end cover 7222 is provided on the end of the reducer housing 722 away from the driving motor 71. In exemplary embodiments, a sliding sealing ring is provided between the end of the reducer housing 722 close to the driving motor 71 and the second planet gear carrier 728. It can be understood that, in exemplary embodiments, the reducer housing 722 and the end cover 7222 form a sealed gear box, and lubricating oil may be injected into the gear box to further improve the transmission efficiency of the planetary reduction mechanism.

Please refer to FIG. 12. In exemplary embodiments, the core shaft 721 is integrated with the main shaft 711, which may further simplify the assembly process, reduce assembly errors, and improve transmission efficiency. In some embodiments, the core shaft 721 and the main shaft 711 are configured as separate structures.

In exemplary embodiments, the reducer 72 is mounted in the rim. In this situation, the reducer 72 is used as the supporting shaft of the traveling wheel 22. The planetary reducer may utilize a short axial space to achieve reduction transmission with a larger transmission ratio. On this basis, in exemplary embodiments of the present disclosure, the planetary reducer is placed in the inner ring space of the traveling wheel 22, which may further reduce the overall axial size of the traveling unit and reduce the lateral width of garden tools such as mowers. In other words, under the same width conditions, more lateral space is left for garden tools such as mowers. Battery compartments, standing platforms, and other structures may be mounted in this space, enabling the center of gravity of garden tools such as mowers to be designed lower to improve their stability. In exemplary embodiments, the airflow generated by the fan 740 flows along the outer wall of the casing 712, and the flow direction of the airflow is substantially parallel to the axial direction of the driving motor 71. In exemplary embodiments, the heat dissipation ribs 7121 are arranged in a long strip shape, and an airflow channel is formed between adjacent heat dissipation ribs 7121. For example, the airflow channel is parallel to the axis direction of the driving motor 71. In exemplary embodiments, the airflow generated by the fan 740 passes through both sides of each heat dissipation rib 7121 without hindrance, and when the airflow passes, it causes heat exchange with the heat dissipation ribs 7121 and the outer wall of the casing 712, thereby cooling the driving motor 71. In exemplary embodiments, the second planet gear carrier 728 and the casing 712 are processed and formed into an integrated structure, thereby, on the one hand, simplifying the assembly process and reducing assembly costs, and on the other hand, making the structure of the entire mower more compact and reducing the cumulative assembly errors of the entire mower.

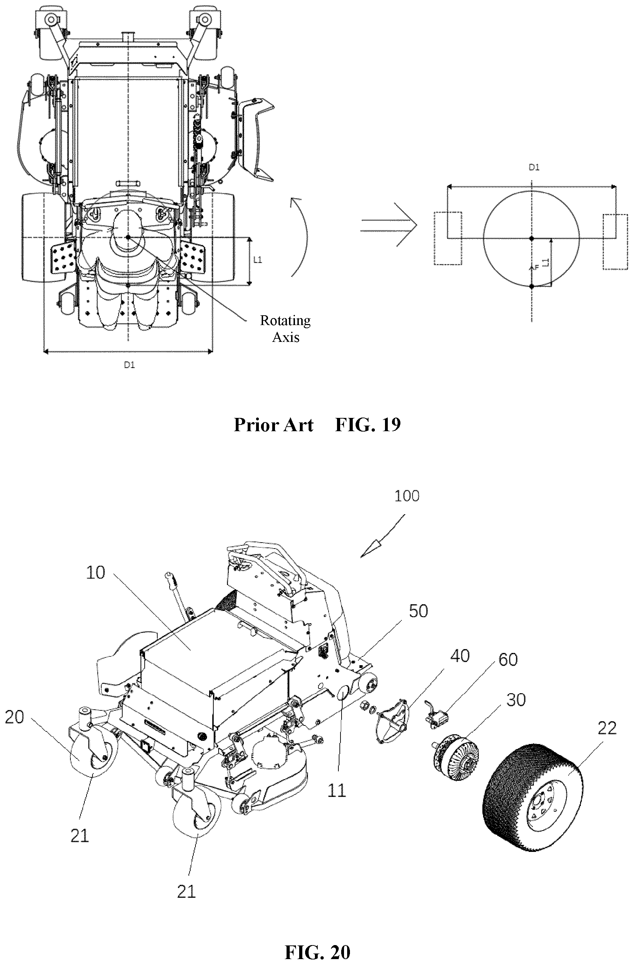

Referring to FIGS. 20-30. In exemplary embodiments, a stand-on mower 100 is configured for users to stand on the mower to perform lawn trimming operations, thereby improving work efficiency and reducing the user's workload. In exemplary embodiments, the stand-on mower 100 includes a body 10, and a traveling mechanism 20, a hub motor 30, a motor base 40 and a stand-on part 50 which are mounted on the body 10.

It should be understood that, in exemplary embodiments, the stand-on mower 100 also includes a battery pack for providing power to the hub motor 30. In exemplary embodiments, a receiving container is provided on the body 10, and the battery pack is disposed in the receiving container.

In exemplary embodiments, the traveling mechanism 20 is mounted on the body 10 to enable the stand-on mower 100 to move forward, move backward, and change directions. In exemplary embodiments, the traveling mechanism 20 includes two front wheels 21 and two traveling wheels 22 arranged opposite to the two front wheels 21 and serving as rear wheels. In exemplary embodiments, the front wheel 21 is configured as a universal wheel, the traveling wheel 22 is configured as a driving wheel, and the hub motor 30 is used to drive the traveling wheel 22 to rotate. It should be understood that in exemplary embodiments, the traveling wheel 22 is configured as a universal wheel, in which case the hub motor 30 is used to drive the front wheel 21 to rotate. In order to save space, the traveling wheel 22 in some embodiments adopts an embedded hub structure. In exemplary embodiments, during installation, the hub motor 30 is disposed inside the traveling wheel 22. As a result, part of the space of the body 10 may be freed up to accommodate other components, realizing a high space utilization rate. Also, since the hub motor is directly connected to the traveling wheel via transmission, no other transmission components are needed, which not only saves space but also improves transmission efficiency.

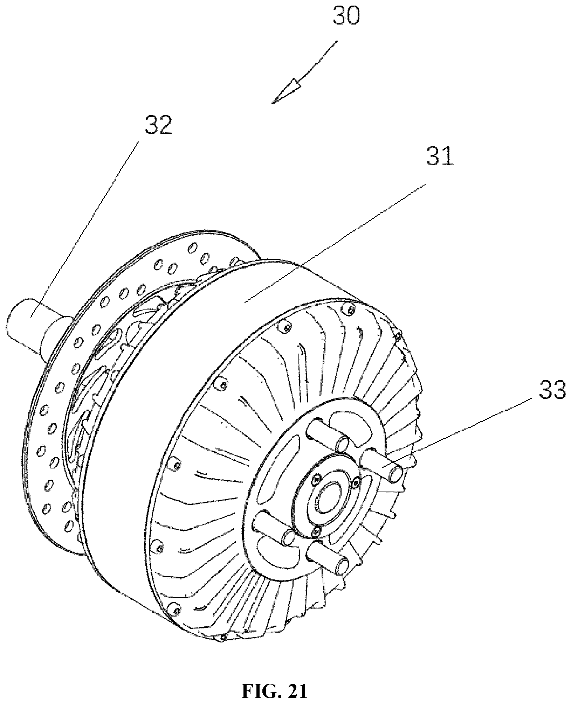

Please refer to FIG. 21. In exemplary embodiments, the hub motor 30 includes a motor body 31 and a motor rotating shaft 32. In exemplary embodiments, the motor body 31 is located in the traveling wheel 22, and a plurality of bolt posts 33 are provided on the end surface of the motor body 31 close to the traveling wheel 22. In exemplary embodiments, the bolt posts 33 evenly distributed along the circumferential direction, and fixedly connected with the hub of the traveling wheel 22. In exemplary embodiments, the motor body 31 includes a motor stator and a plurality of magnetic tiles. In exemplary embodiments, the motor rotating shaft 32 is connected to the motor stator. In exemplary embodiments, the traveling wheel 22 wraps around the motor stator. In exemplary embodiments, the plurality of magnetic tiles is evenly distributed on the outer circumference of the motor stator. For example, the hub motor 30 may include a housing, a plurality of magnetic tiles is fixedly disposed on the inner peripheral surface of the housing, and the plurality of magnetic tiles is spaced apart along the axial direction of the housing, and the housing is fixedly connected to the traveling wheel 22. In exemplary embodiments, when the hub motor 30 is working, the plurality of magnetic tiles rotates relative to the motor stator along the axial direction of the motor stator. Since the plurality of magnetic tiles is fixedly connected to the housing, the plurality of magnetic tiles is able to drive the housing to rotate, thereby causing the housing to rotate to make the traveling wheel 22 rotate together so as to realize the movement of the mower 100.

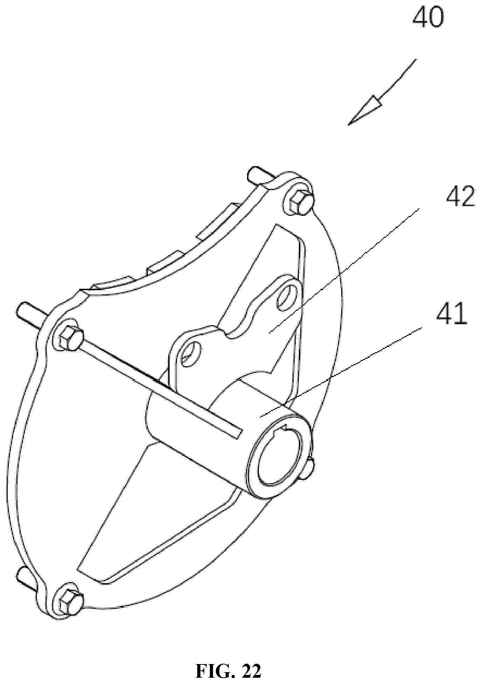

Please refer to FIG. 22. In exemplary embodiments, the motor base 40 includes a circular keyway 41, and the circular keyway 41 is provided on the end surface of the motor base 40 close to the hub motor 30. When mounted, the motor rotating shaft 32 of the hub motor 30 is accommodated in the circular keyway 41. Correspondingly, there is a groove on the motor rotating shaft 32, and a flat key is fixed in the groove. With this structure, the axial rotation and axial movement of the motor rotating shaft 32 may be limited, and the motor rotating shaft 32 may be well fixed on the motor base 40, thereby further improving the structural stability of the entire stand-on mower 100.

Please refer to FIG. 20. In exemplary embodiments, the body 10 is provided with an avoidance opening 11, and the part of the motor rotating shaft 32 beyond the circular keyway 41 passes through the avoidance opening 11 and is bolted to the body 10.

It should be understood that for the convenience of control, in exemplary embodiments, two hub motors 30 are provided, each of which is mounted in a traveling wheel 22, and the two hub motors 30 are independent of each other and the rotation speed and steering of each hub motor 30 is controlled independently. In exemplary embodiments, there are two motor bases 40, and each hub motor 30 is connected to the body 10 through a motor base 40.

In exemplary embodiments, two hub motors 30 are respectively arranged in one traveling wheel 22, and the traveling wheel 22 with the hub motor 30 can drive the stand-on mower 100 to move forward and backward. For example, when the traveling wheels 22 on the left and right sides rotate at the same speed, the stand-on mower 100 moves forward in a straight line. For example, when the traveling wheels 22 on the left and right sides rotate at different speeds, the stand-on mower 100 turns. For example, when the traveling wheels 22 on the left side rotate at a higher speed than the right side, the stand-on mower 100 turns to the right. For example, when the traveling wheel 22 on the right side rotates at a higher speed than the left side, the stand-on mower 100 turns to the left. For example, when the traveling wheels 22 on the left and right sides turn in the opposite direction, the mower 100 turns in place.

In exemplary embodiments, in order to achieve a better mowing effect, the rotation speed of the hub motor of the stand-on mower 100 should consider the rotation speed of the blade. For example, when the traveling speed of the stand-on mower 100 becomes faster, that is, when the rotational speed of the hub motor is high, the rotational speed of the blade should also be increased to avoid uneven mowing. For example, when the traveling speed of the stand-on mower 100 slows down, the rotational speed of the blade also decreases. In exemplary embodiments, when the outer diameter of the selected hub motor 30 is 230 to 260 mm, the operating speed is 100 to 140 rpm, and the rated power is 2.8 to 3.2 kW.

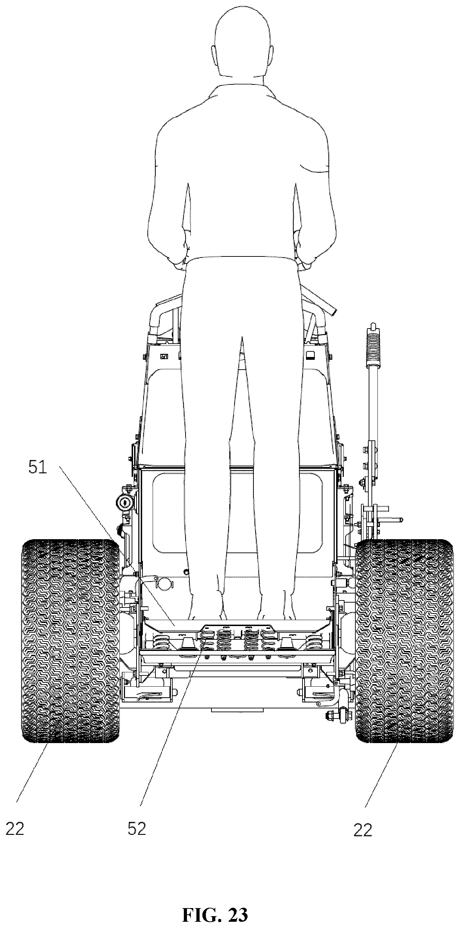

Please refer to FIGS. 20 and 23. In exemplary embodiments, the stand-on part 50 is provided at the rear of the body 10, is fixedly connected to the body 10, and is located between the two traveling wheels 22.

Please refer to FIGS. 23 to 25. In exemplary embodiments, the stand-on part 50 includes a platform 51 and a shock absorber 52, where the platform 51 is fixedly connected to the body 10, the platform 51 is partially located between the two traveling wheels 22, and the end of the platform close to the front wheel 21 is located between the front wheel 21 and the axis line of the two traveling wheels 22. By adopting this approach, when a user stands on the stand-on part 50, the center of gravity of the user's body is located at the center of the axis line of the traveling wheels of the stand-on mower 100. Therefore, when rotating, there is no rotation radius, and no centrifugal force is generated, which may eliminate the risk of the user's body being thrown away. In addition, the stand-on part 50 moves forward, and the center of gravity of the user's body also moves forward accordingly. Therefore, it may be safer and less likely to roll over when climbing a slope or moving over an uneven surface.

In exemplary embodiments, the shock absorber 52 is disposed below the platform 51, where one end of the shock absorber 52 is fixedly connected to the body 10, and the other end of the shock absorber 52 abuts against the platform 51. By adopting this approach, the discomfort caused by vibrations to users when the mower moves on uneven roads may be effectively avoided, thereby improving the user experience. In exemplary embodiments, the shock absorber 52 includes a plurality of shock-absorbing springs, and the number of the shock-absorbing springs at the center of the stand-on part is greater than the number of the shock-absorbing springs at the edge of the stand-on part. In exemplary embodiments, the platform 51 is also provided with an anti-slip pattern 53, which may increase the friction between the user's soles and the surface of the platform when the user stands on the platform 51, thereby helping to improve the user's safety.

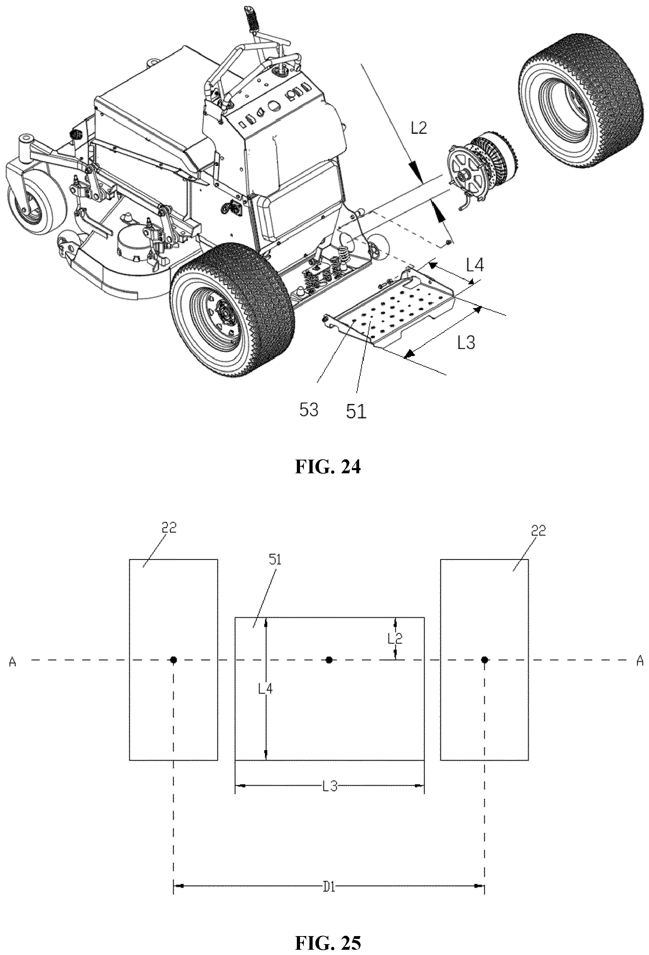

Please refer to FIG. 25, which is a schematic diagram of the dimensions between the platform 51 and the two traveling wheels 22. In exemplary embodiments, the two traveling wheels 22 have an axis line AA, and the distance L2 between the end of the platform 51 close to the front wheel and the axis line AA is between 70 mm and 85 mm. In exemplary embodiments, the horizontal distance L2 is set to 78.6 mm. By adopting this approach, when the user stands on the platform to control the stand-on mower 100, the user's center of gravity may be as close as possible to the midpoint of the axis line of the two traveling wheels, so that the centrifugal force experienced by the user is smaller and there is no risk of being thrown out. It should be understood that although the centrifugal force has nothing to do with the vertical height of the platform, in order to ensure user safety, this height should be minimized during design.

In order to allow the user to have enough space when standing on the platform 51 and to better adjust the position of the center of gravity of the user, the size of the platform 51 may be appropriately increased. Combined with the size and the power of the above-mentioned hub motor 30, in exemplary embodiments, the area of the platform 51 ranges from 19 × 104 to 20 × 104 mm². In exemplary embodiments, when the wheel-to-wheel distance D1 is 948 mm, the length L3 of the platform 51 is set to 560 mm, and the width L4 is set to 353 mm.

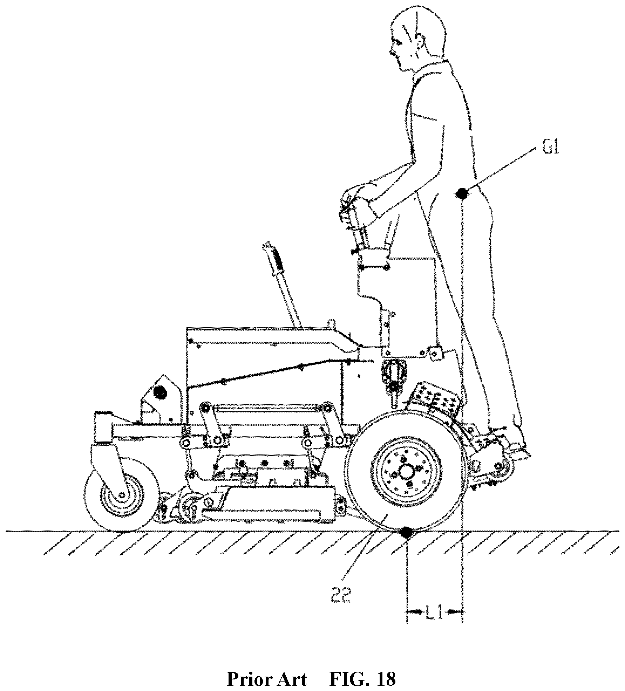

Please refer to FIGS. 18 and 19. In the stand-on mower 100 of prior art, the user's standing point is behind the two traveling wheels. Thus, a centrifugal force F=m*a will be generated during turning, where m is the weight of a user's body, and a is the centripetal acceleration. It is assumed that the wheel-to-wheel distance D1 is 948 mm, the distance L1 between the center of gravity G1 of the user's body and the axis line of the two traveling wheels in the forward direction of the stand-on mower 100 is 270 mm, the weight m of the user's body is 70 kg, and the turning speed v is 4.96 km/h. In the case where the stand-on mower 100 turns to the left and performs uniform circular motion, based on following equations F=m*a, a=w²*r1, r1=L1, w=v/r2, r2=D1/2=0.948/2=0.474 m, the centrifugal force F is calculated as F=70*(4.96/3.6/0.474)²r1=70*2.9*2.9*0.27=159N, where r1 is the user's rotation radius, and r2 is the turning radius.

Therefore, when the stand-on mower 100 turns, a user weighing 70 kg will receive a centripetal force of at least 159 N and will be easily thrown out and in danger.

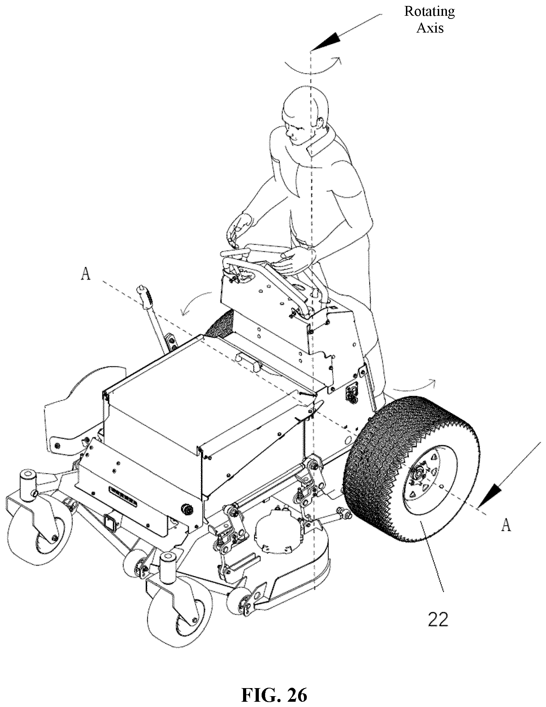

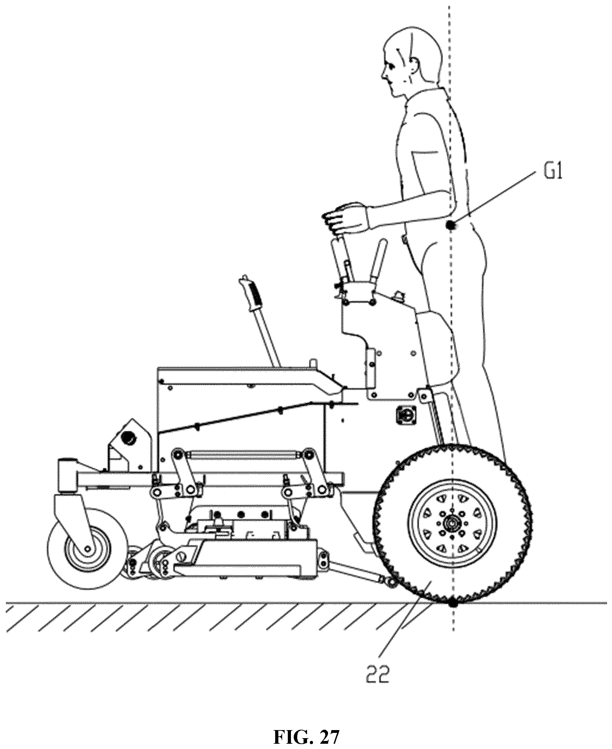

Please refer to FIG. 26 and FIG. 27. In exemplary embodiments, by adopting this approach, when controlling the stand-on mower 100, the user can adjust the standing position appropriately so that the center of gravity of the user's body coincides with the midpoint of the axis line of the traveling wheels, that is, located on the rotational axis of the stand-on mower 100. In this situation, there is no rotational radius. As a result, when the stand-on mower 100 rotates, the centrifugal force experienced by the user is small and close to zero, which may effectively improve the user's safety.

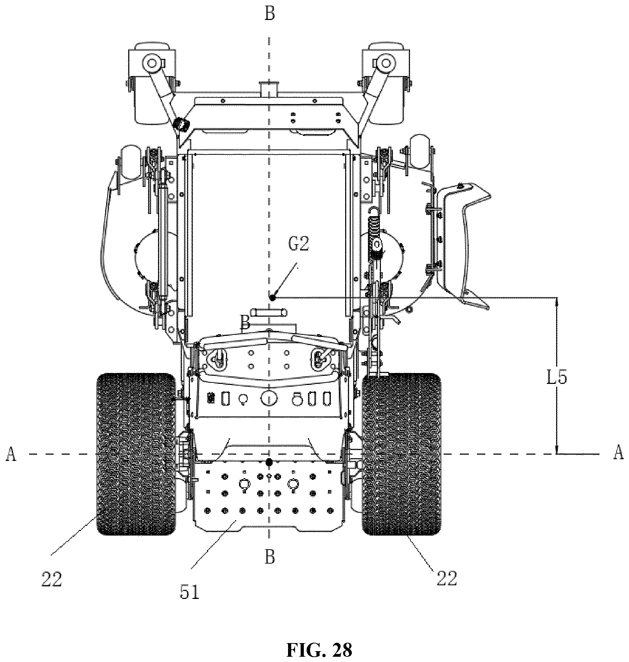

Please refer to FIG. 28. In exemplary embodiments, there is a center line BB in the forward direction of the stand-on mower 100. The center of gravity G2 of the stand-on mower 100 is on the center line BB. For example, along the direction of the center line BB, the distance L5 between the center of gravity G2 and the axis line of the two traveling wheels 22 is between 500 m and 600 mm.

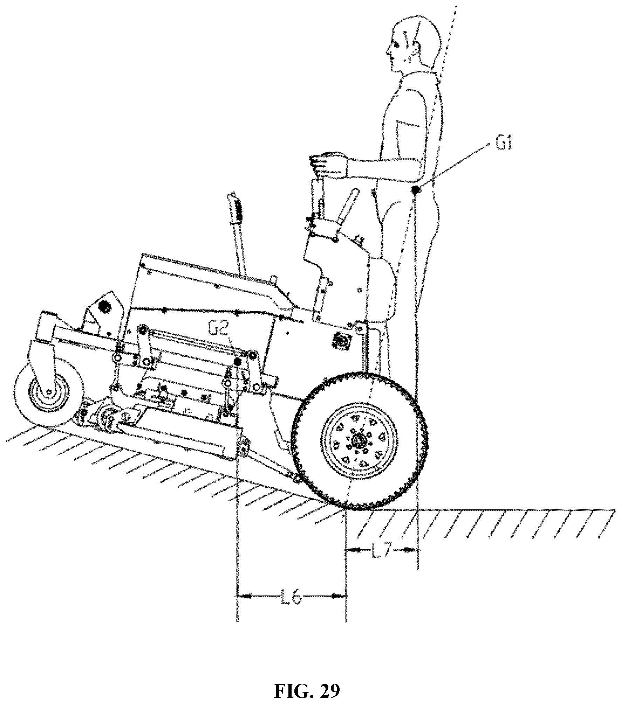

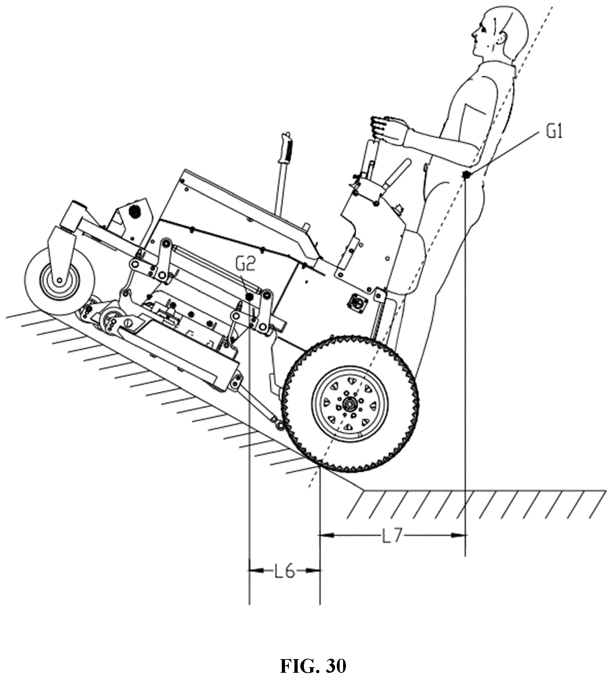

Please refer to FIGS. 29 and 30. FIGS. 29 and 30 show the force states of the stand-on mower 100 at different slopes. When the stand-on mower 100 rolls over, the fulcrum is the contact point between the two traveling wheels 22 and the ground. In this situation, the center of gravity G2 of the stand-on mower 100 has a moment MG2=G2*L6 relative to the fulcrum, and the user's center of gravity G1 has a moment MG1 =G1 *L7 relative to the fulcrum, where the moment MG2 prevents the stand-on mower 100 from rolling over, and the moment MG1 pushes the stand-on mower 100 to overturn. When the moment MG2 is greater than the moment MG1, the stand-on mower 100 will not overturn. Therefore, considering that the terrain may cause the risk of head tilt of the stand-on mower 100, the center of gravity G2 should be designed as close to the front position of the mower as possible. In combination with the overall space layout, in exemplary embodiments, the distance L5 is set to 580 mm.

In exemplary embodiments, the platform 51 is arranged between the two traveling wheels 22. Therefore, when the mower rolls over, the center of gravity G1 of the user's body is close to the rotation axis, which may greatly reduce the torque MG1, thereby reducing the risk of the stand-on mower 100 rolling over and thus ensuring user safety. Referring to FIGS. 20 and 22. In exemplary embodiments, the stand-on mower 100 also includes a brake assembly 60, where the brake assembly 60 is disposed on the end surface of the motor base 40 close to the hub motor 30 and is connected to a brake handle of the stand-on mower 100 via transmission. Correspondingly, the end surface of the motor base 40 close to the hub motor 30 is provided with a fixed piece 42, and the brake assembly 60 is fixed on the motor base 40 through the fixed piece 42. When the brake handle is gripped, the brake assembly 60 abuts against a brake disc of the mower 100, causing the traveling wheel 22 to stop rotating. In exemplary embodiments, the brake disc is arranged on the end cover on the side of the hub motor 30 close to the motor rotating shaft 32 and is bolted to the end cover of the hub motor. It should be understood that the brake assembly 60 is a conventional structure in the traditional technique and can be implemented with mature devices and design methods, and the present disclosure does not limit its specific structure. Considering that mechanical brakes are more reliable, a mechanical brake assembly is selected in some exemplary embodiments.

In exemplary embodiments, the hub motor 30 and the brake assembly 60 are mounted on the motor base 40 in advance. During the assembly of the entire mower, it is only needed to fix the motor base 40 on the body 10 and fit the two traveling wheels 22 onto the hub motor 30. This completes the installation, thereby saving a significant amount of assembly time.

In summary, the stand-on mower of exemplary embodiments of the present disclosure may have a simple structure, a compact space, and is easy to install. While ensuring the structural strength requirements of the mower, the space at the rear of the mower may be saved for humans to stand, and the center of gravity of the user's body is designed at the midpoint of the axis line of the two traveling wheels, so that the mower will not generate centrifugal force when turning at high speed, ensuring the safety of the user. Therefore, some exemplary embodiments of the present disclosure may effectively overcome various shortcomings in the conventional technique and may have high industrial utilization value.

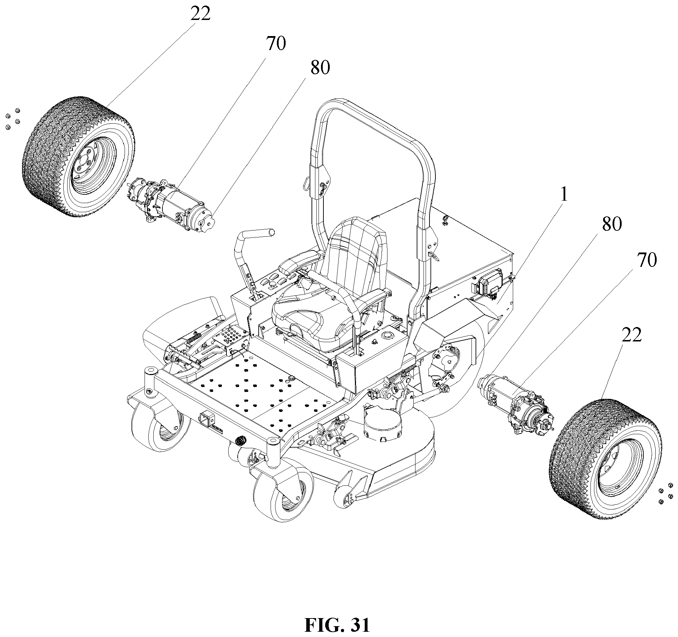

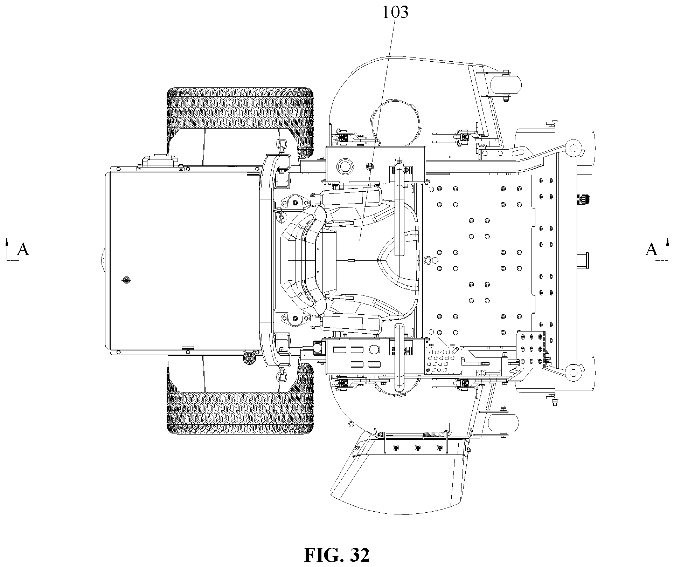

Please refer to FIGS. 31 to 34. Some exemplary embodiments provide an electric mower. The electric mower automatically enters the braking state of the traveling wheel 22 when the power is off, which may solve the problem that some mowers cannot brake on their own when the power is off during the climbing process.

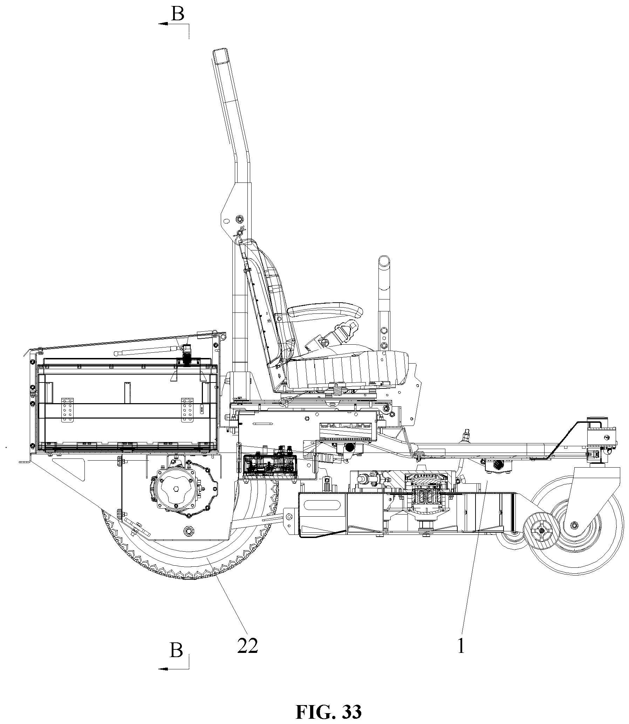

Please refer to FIGS. 33, 34 and 35. In exemplary embodiments, an electric mower includes a body 1, a driving unit 70, an energy device (not shown), and an electromagnetic braking mechanism 80. In exemplary embodiments, the rear side of the body 1 is provided with two traveling wheels 22, and the front side of the body 1 is provided with two driven wheels. Those skilled in the art would understand that in exemplary embodiments, the mower adopts a form of front-drive, i.e., the driving wheels are arranged on the front side of the mower body, and the driven wheels are arranged on the rear side of the mower body. In exemplary embodiments, two electric traveling wheels 22 are driven by two driving units 70, respectively. In exemplary embodiments, the output shafts of the two driving units 70 are connected to the two traveling wheels 22 through hubs, respectively, and provide power for the traveling wheels 22. In exemplary embodiments, the energy device (not shown) supplies energy to the driving unit 70. The energy device in the present disclosure includes but is not limited to a battery pack. For example, the battery pack includes multiple single battery packs capable of powering handheld power tools, or the battery pack is an integral large battery pack. In exemplary embodiments, the two electromagnetic braking mechanisms 80 are respectively mounted on the two driving units 70 and are electrically connected to the energy device. Each electromagnetic braking mechanism 80 has a first state where the output shaft of the corresponding driving unit 70 is braked and a second state where the output shaft is released, where the electromagnetic braking mechanism 80 is in the first state under a power-off state. In a power-off state, the electromagnetic braking mechanism 80 loses power, and the electric mower automatically enters the first state of braking the traveling wheels 22 without the need for an operator to operate the mechanical brake.

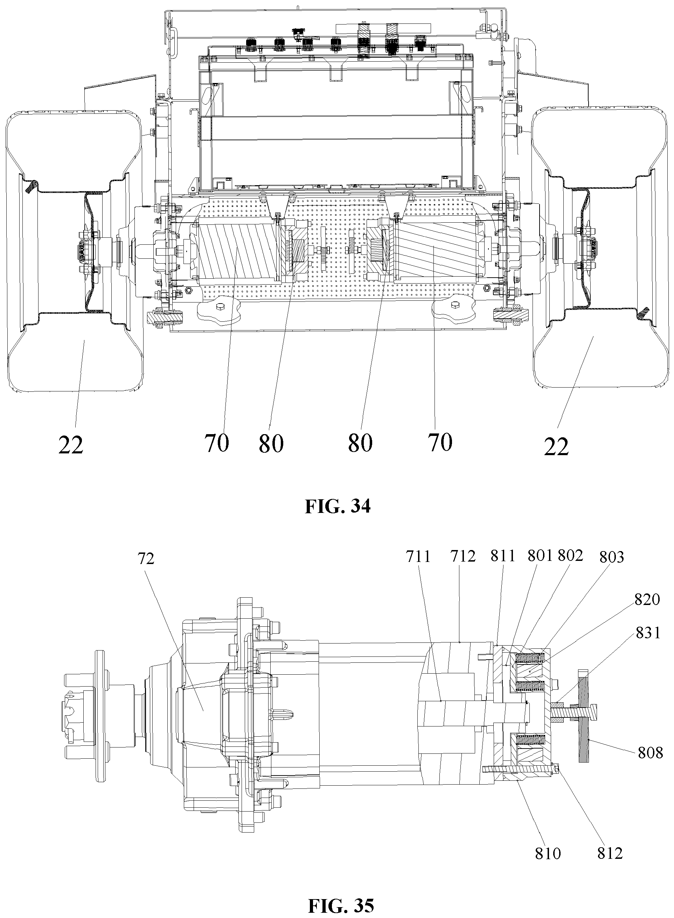

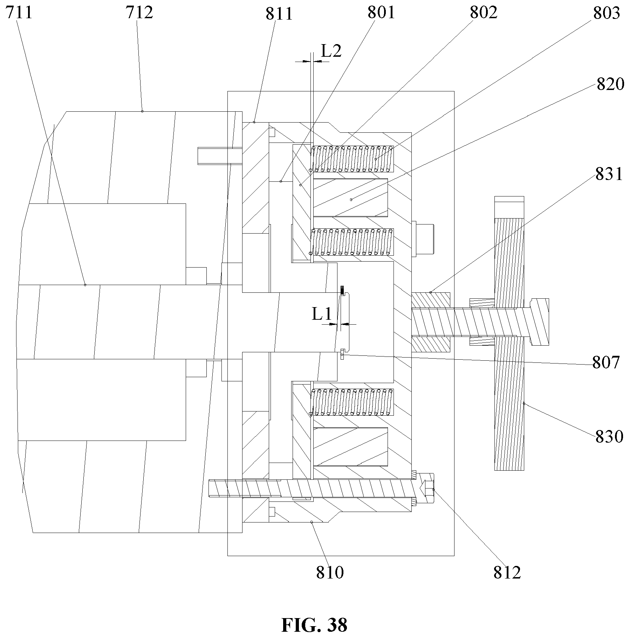

In exemplary embodiments of the present disclosure, the structure of the electromagnetic braking mechanism 80 is not limited as long as the electromagnetic braking mechanism 80 can brake and lock the output shaft of the driving unit 70 in a power-off state. Please refer to FIGS. 35 and 38, in exemplary embodiments of the present disclosure, the electromagnetic braking mechanism 80 includes a box 810, a brake pad 801, a pressure plate 802, at least one elastic member 803, and an electromagnetic coil 820. In exemplary embodiments, the box 810 is mounted on the casing 711 of the motor on the side of the driving unit 70 away from the traveling wheel 22 through the first bolt 812 and is provided with a brake stopper 811. In exemplary embodiments, one end of the output shaft of the driving unit 70 is connected to the traveling wheel 22, and the other end of the output shaft extends out of the casing of the driving unit 70 and into the box 810. In exemplary embodiments, the brake pad 801 is slidably mounted on one end of the output shaft of the driving unit 70 that extends into the box 810 and the brake pad 801 is located on the side of the brake stopper 811 away from the traveling wheel 22. In exemplary embodiments, the brake pad 801 is immovable with respect to the output shaft in the circumferential direction but is axially slidable within a first distance range L1 to contact with or disconnect from the brake stopper 811. In exemplary embodiments, the pressure plate 802 is slidably mounted on the box 810 on the side of the brake pad 801 away from the stopper and is axially slidable within a second distance range L2. In exemplary embodiments, the at least one elastic member 803 is mounted on the box 810 and presses the pressure plate 802 to press the brake pad 801 on the brake stopper 811 tightly. In exemplary embodiments, the electromagnetic coil 820, after being energized, attracts the pressure plate 802 to overcome the force of the elastic member 803 and move away from the brake pad 801 to release the compression of the brake pad 801 by the pressure plate 802. In exemplary embodiments of the present disclosure, the first distance range L1 is smaller than the second distance range L2.

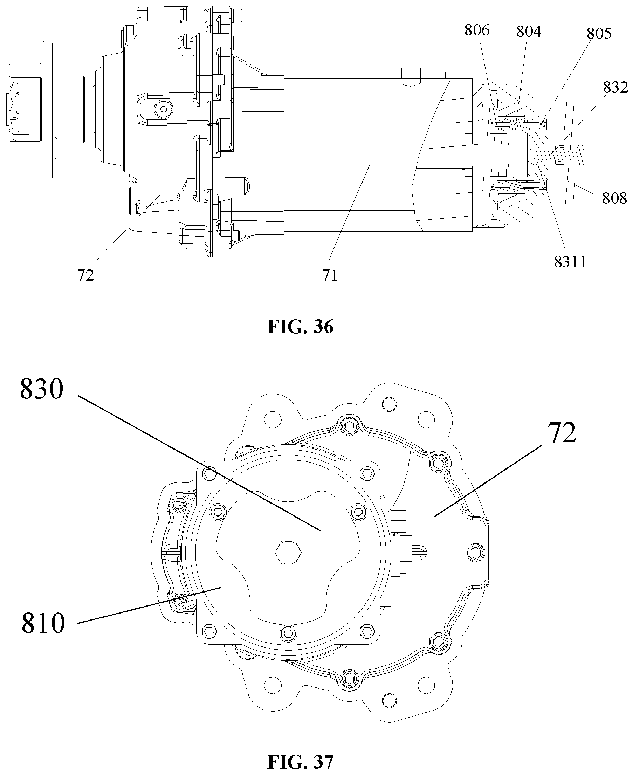

Please refer to FIGS. 35, 36, 37 and 39. In exemplary embodiments of the present disclosure, the electromagnetic braking mechanism 80 includes a manual release assembly 830 for manually opening and closing the electromagnetic braking mechanism 80. In exemplary embodiments, the manual release assembly 830 includes a connecting plate 831 and an operating part 808. In exemplary embodiments, the connecting plate 831 is connected to the pressure plate 802 and has a threaded through hole 8311. In exemplary embodiments, the operating part 808 is threadedly connected and mounted in the threaded through hole 8311 and abuts against the wall of the box 810. In exemplary embodiments, when the operating part 808 is rotated, the connecting plate 831 drives the pressure plate 802 closer to or away from the brake pad 801. For example, the operating part 808 can be any structure suitable for manual screwing. In exemplary embodiments of the present disclosure, the operating part 808 is a manual turntable. In exemplary embodiments, the manual turntable is provided with a stud 832, and an end of the stud 832 is threadedly connected to the threaded through hole 8311 on the connecting plate 831 and abuts against the outer wall of the box 810. When the manual turntable is rotated, the stud 832 rotates in the threaded through hole 8311, so that the connecting plate 831 moves toward the side away from the brake pad 801, thereby releasing the pressing of the pressure plate 802 on the brake pad 801.

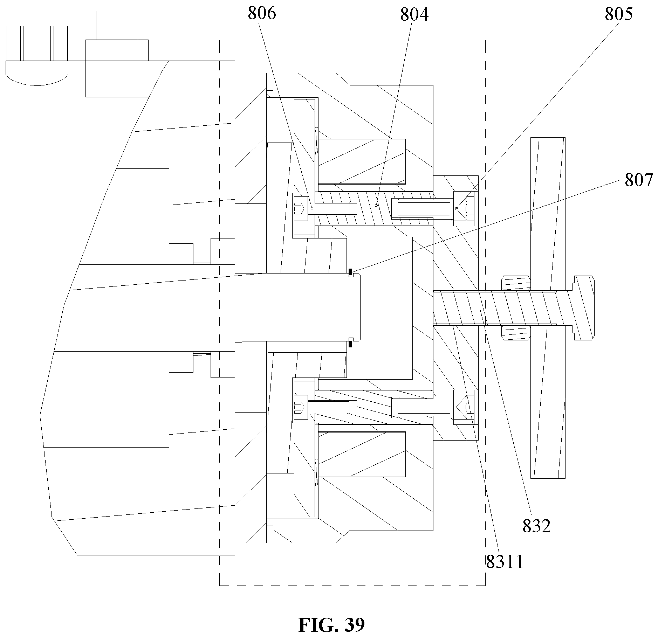

In exemplary embodiments of the present disclosure, the sliding installation method of the pressure plate 802 on the box 810 and the connection method between the pressure plate 802 and the connecting plate 831 may be various. Please refer to FIG. 39. In exemplary embodiments of the present disclosure, the box 810 has a plurality of guiding through holes, and a guider 804 is slidably mounted in each guiding through hole. In exemplary embodiments, the pressure plate 802 is connected to one end of the guider 804 through a second bolt 806, and the connecting plate 831 is connected to the other end of the guider 804 through a third bolt 805.

In exemplary embodiments of the present disclosure, the number of elastic members 803 may be one, two, or more. For example, in exemplary embodiments of the present disclosure, the elastic member 803 is a spring, and there is only one spring. The spring is coaxially fitted on the output shaft like a sleeve, where one end of the spring is fixed on the box 810, and the other end of the spring is fixed on the pressure plate. A larger pressure output may be achieved by providing a spring with a larger wire diameter. However, please refer to FIG. 39, in exemplary embodiments, the elastic member 803 is a spring, and there are multiple elastic members 803 divided into two groups, namely a first spring group and a second spring group. For example, the plurality of springs in the first spring group is evenly distributed on a first circumference, and the plurality of springs in the second spring group is evenly distributed on a second circumference, where the first circumference and the second circumference are coaxial with the output shaft but the first circumference and the second circumference do not overlap with each other. In exemplary embodiments, the electromagnetic coil 820 is arranged between the first circumference and the second circumference. This structure allows the pressure plate to be evenly stressed, whether under the pressure of the elastic member 803 alone or the combined action of the electromagnetic coil 820 and the elastic member 803, thereby having high stability.

In exemplary embodiments of the present disclosure, the sliding installation method of the brake pad 801 on the output shaft is not limited. For example, it may be a flat key or a spline connection since the flat key and spline can meet the needs of power transmission and can realize sliding and guidance functions within a certain range. Please refer to FIG. 39. In exemplary embodiments, the brake pad 801 is connected to the output shaft through splines. The splines may make the force more evenly applied on the brake pad 801 and prevent the brake pad 801 from breaking when the force is concentrated. In exemplary embodiments, in order to prevent the brake pad 801 from being separated from the output shaft, an elastic retaining ring 807 is mounted on the output shaft on the side of the brake pad 801 away from the brake stopper 811. The elastic retaining ring 807 may provide limitations on the movement of the brake pad 801 and have advantages such as easy installation and low cost.

In exemplary embodiments of the present disclosure, the brake stopper 811 is arranged on the box 810 in various ways. For example, the brake stopper 811 is integrated with the box 810 in a casting structure, or a brake disc is bonded to the box 810, etc. However, considering the wear susceptibility of the brake disc, please refer to FIG. 38, in exemplary embodiments of the present disclosure, the brake stopper 811 is a brake disc removably mounted on the box 810. When the brake disc is worn or damaged, it may be disassembled and replaced, reducing maintenance costs.

In exemplary embodiments of the present disclosure, the installation of the box 810 on the casing 712 may be done in various ways. For example, the box 810 and the casing 712 are integrally casted or they are connected by welding. Please refer to FIG. 38, in exemplary embodiments of the present disclosure, the box 810 is detachably mounted on the casing 712 to facilitate the disassembly and maintenance of the electromagnetic braking mechanism 80 when necessary.

Those skilled in the art can understand that, in exemplary embodiments of the present disclosure, the output shaft may be any output shaft that can provide power for the traveling wheel 22, such as an output shaft of the motor or an output shaft of the reducer 72. Please refer to FIGS. 38 and 39. In exemplary embodiments of the present disclosure, the output shaft is an output shaft of the motor, and the output shaft of the motor drives the traveling wheel 22 through the reducer 72. In exemplary embodiments, the electromagnetic braking mechanism 80 is disposed at an end of the output shaft of the motor away from the traveling wheel 22 and is configured to, when necessary, brake and lock the traveling wheel 22 by preventing the motor output shaft from rotating. It should be noted that, in exemplary embodiments of the present disclosure, the output shaft of the motor is directly connected to the traveling wheel 22 without having to be connected to the traveling wheel 22 after being decelerated through the reducer 72. In exemplary embodiments of the present disclosure, the output shaft is an output shaft of the reducer, the output shaft of the motor is connected to the input shaft of the reducer 72, and the electromagnetic braking mechanism 80 is provided at an end of the output shaft of the reducer away from the traveling wheel 22, and is configured to, when necessary, brake and lock the traveling wheel 22 by preventing the output shaft of the reducer from rotating.

In exemplary embodiments of the present disclosure, the switching of the electric mower between the first state and the second state is realized by a switch. However, considering the automation requirements, in exemplary embodiments of the present disclosure, the electric mower also includes a controller (not shown), where the controller is electrically connected to the electromagnetic braking mechanism 80 and controls the switching of the electromagnetic braking mechanism 80 between the first state and the second state. The operator can change the state of the electromagnetic braking mechanism 80 as needed through the controller. In exemplary embodiments, the present disclosure may also include other human-computer interaction interfaces such as touch screens, which will not be described again here.

Please refer to FIGS. 31 to 34. In exemplary embodiments of the present disclosure, a driver seat is provided on the body 1, and a driver presence detection device (not shown) is provided on the driver seat. In exemplary embodiments, the presence detection device is electrically connected to the controller and can be a switch, sensor, etc. For example, when the driver is in position, the switch is ON (or OFF), and when the driver is not in position, the switch is OFF (or ON), such that a signal is sent to the controller to de-energize the electromagnetic brake. When the entire mower is on a sloping surface, if the driver leaves the seat for a set time and forgets to power off and lock the mower, the controller will power off the entire mower, such that the electromagnetic brake will automatically power off and lock the mower to achieve parking. In exemplary embodiments, the set time is 3 to 10 seconds, such as 3 seconds, 6 seconds, 10 seconds, etc. In exemplary embodiments of the present disclosure, the set time is 5 seconds, and this set time may prevent inadvertent power cutoff due to the driver leaving the seat accidentally during bumps, while also avoiding the risk of leaving the mower in an unsafe condition for too long. In exemplary embodiments, the mower is powered off and locked once it is detected that the driver is leaving the seat.

In exemplary embodiments, the working principle is as follows. When the entire mower is in a power-off state, the electromagnetic coil 820 is not powered. At this time, the electromagnetic coil 820 does not work. The elastic member 803 presses the pressure plate 802, the brake pad 801 and the brake disc together. The friction force on the braking surface of the brake pad 801 is large enough to lock the output shaft of the driving motor to not rotate so as to achieve the parking function. When the entire mower is powered on normally, the controller controls the electromagnetic brake to power on after completing the self-test. At this time, the electromagnetic coil 820 will generate an attraction force due to the electromagnetic effect to attract the pressure plate 802 such that the pressure plate 802 is separated from the brake pad 801. After the output shaft of the driving motor starts to rotate, the brake pad 801 is separated from the brake disc under the action of centrifugal force such that the entire mower can move normally. When manual pushing is required in the power-off state, the connecting plate 831 can be disengaged from the electromagnetic brake box 810 by rotating the manual release assembly 830. Since the pressing plate 802 and the connecting plate 831 are fixed together through the guider 804, the pressing plate 802 disengages from the brake pad 801, releasing the braking function.

## Claims

1. A garden tool, comprising:
a body;
at least two traveling wheels located on two sides of the body, respectively; and
a driving unit including a driving motor and a reducer, wherein a power input end of the reducer is connected to an output shaft of the driving motor, the reducer is mounted in the traveling wheel, a power output end of the reducer is fixedly connected to the traveling wheel, and a casing of the driving motor is fixedly connected to the body.

2. The garden tool according to claim 1, wherein the reducer includes:
a core shaft synchronously rotatably connected to the output shaft of the driving motor, wherein a first sun gear is provided on the core shaft and is coaxially fixed with the core shaft;
a first planet gear carrier rotatably connected to the core shaft, wherein a first planet gear and a second sun gear are provided on the first planet gear carrier, the first planet gear is rotatably connected to the first planet gear carrier, the first planet gear engages with the first sun gear, and the second sun gear is coaxially fixed with the first planet gear carrier;
a second planet gear carrier fixedly connected to the casing of the driving motor, wherein a second planet gear is rotatably provided on the second planet gear carrier, and the second planet gear engages with the second sun gear; and
a reducer housing fixedly connected to the rim, wherein a first internal ring gear and a second internal ring gear are provided on the reducer housing, the first internal ring gear and the second internal ring gear are axially arranged at intervals, the first internal ring gear engages with the first planet gear, and the second internal ring gear engages with the second planet gear.

3. The garden tool according to claim 2, wherein the reducer housing includes a cylindrical side wall and an end cover, the cylindrical side wall is rotatably connected to the second planet gear carrier through a bearing, and the end cover is fixed on an end of the cylindrical side wall away from the driving motor.

4. The garden tool according to claim 3, wherein a sliding sealing ring is provided between the cylindrical side wall and the casing of the driving motor.

5. The garden tool according to claim 2, wherein the second planet gear carrier is integrated with the casing of the driving motor.

6. The garden tool according to claim 2, wherein the reducer housing is rotatably connected to the second planet gear carrier through a bearing.

7. The garden tool according to claim 2, wherein the core shaft is integrated with the output shaft of the driving motor.

8. The garden tool according to claim 2, wherein the core shaft is detachably connected to the output shaft of the driving motor.

9. The garden tool according to claim 2, wherein the first planet gear carrier includes a first component and a second component that are arranged separately from each other, the first planet gear is rotatably arranged on the first component, the second sun gear is relatively fixed to the second component, and a synchronous rotational fit is formed between the first component and the second component through keys or teeth.

10. The garden tool according to claim 2, wherein heat dissipation ribs are provided on an outer wall of the casing of the driving motor, a fan is provided at one end of the reducer housing facing toward the casing of the driving motor, the fan is configured so that when the reducer housing rotates relative to the casing of the driving motor, an airflow generated by the fan flows through the heat dissipation ribs.

11. The garden tool according to claim 10, wherein the fan includes an annular base plate and blades evenly arranged along a circumferential direction of the annular base plate, an end of the reducer housing close to the casing of the drive motor is provided with a flange, the annular base plate is mounted on a side of the flange facing toward the casing of the driving motor, and the blades protrude toward the heat dissipation ribs.

12. The garden tool according to claim 10, wherein the heat dissipation ribs protrude along a radial direction of the casing of the driving motor, the heat dissipation ribs are strip-shaped, and a length direction of the heat dissipation ribs is parallel to an axis direction of the casing of the driving motor.

13. A garden tool, comprising:
a body;
at least two traveling wheels located on two sides of the body, respectively; and
a hub motor mounted in the traveling wheel, wherein the hub motor includes a motor body and a motor rotating shaft, the motor body is fixedly connected to the traveling wheel, and the motor rotating shaft is fixedly connected to the body.

14. The garden tool according to claim 13, further comprising:
a platform connected to the body, wherein the platform is partially located between the two traveling wheels, and a front end of the platform is located in front of an axis line of the two traveling wheels.

15. The garden tool according to claim 13, wherein the motor body includes a motor stator and a plurality of magnetic tiles, the motor stator is connected to the motor rotating shaft, and the magnetic tiles are evenly distributed on an outer circumference of the motor stator.

16. The garden tool according to claim 13, further comprising:
a motor base, wherein a first end of the motor base is connected to the body, and a second end of the motor base is connected to the hub motor; and
a circular keyway provided on an end face of the motor base close to the hub motor, wherein the motor rotating shaft is inserted into the circular keyway through a flat key.

17. The garden tool according to claim 16, wherein the body is provided with an avoidance opening, and a part of the motor rotating shaft beyond the circular keyway passes through the avoidance opening and is connected to the body through a bolt.

18. The garden tool according to claim 14, wherein a distance between the front end of the platform and the axis line of the two traveling wheels is between 70 mm and 85 mm.

19. The garden tool according to claim 13, wherein in a forward direction of the garden tool, a distance between a center of gravity of the garden tool and the axis line of the two traveling wheels is between 500 mm and 600 mm.

20. The garden tool according to claim 16, further comprising:
a brake assembly which is provided on an end surface of the motor base close to the hub motor and is connected to a brake handle of the garden tool via transmission,
wherein after the brake handle is gripped, the brake assembly abuts against a brake disc of the garden tool.
